(19) Europäisches Patentamt
European Patent Office
Office européen des brevets

(11) **EP 3 941 784 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **20720403.3**

(22) Anmeldetag: **16.04.2020**

(51) Internationale Patentklassifikation (IPC):
**B60L 58/40** (2019.01)

(52) Gemeinsame Patentklassifikation (CPC):
**B60L 50/75; B60L 1/02; B60L 58/31; B60L 58/32; B60L 58/40; H01M 8/04231; H01M 8/0432; H01M 8/04388; H01M 8/04395; H01M 8/04723; H01M 8/04753; H01M 8/2457; H01M 8/249; H01M 10/44; H01M 16/006;** (Forts.)

(86) Internationale Anmeldenummer:
**PCT/EP2020/060714**

(87) Internationale Veröffentlichungsnummer:
**WO 2020/212494 (22.10.2020 Gazette 2020/43)**

(54) **SCHALTUNGSANORDNUNG FÜR EIN BORDNETZ EINES ELEKTRISCH ANGETRIEBENEN KRAFTFAHRZEUGS UND VERFAHREN ZUM BETREIBEN EINER SOLCHEN SCHALTUNGSANORDNUNG**

CIRCUIT ARRANGEMENT FOR A VEHICLE ELECTRICAL SYSTEM OF AN ELECTRICALLY DRIVEN MOTOR VEHICLE AND METHOD FOR OPERATING A CIRCUIT ARRANGEMENT OF THIS TYPE

ENSEMBLE DE CIRCUITS POUR UN RÉSEAU DE BORD D'UN VÉHICULE À MOTEUR À PROPULSION ÉLECTRIQUE ET PROCÉDÉ POUR FAIRE FONCTIONNER UN TEL ENSEMBLE DE CIRCUITS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2019 DE 102019110343**

(43) Veröffentlichungstag der Anmeldung:
**26.01.2022 Patentblatt 2022/04**

(73) Patentinhaber: **STACK Hydrogen Solutions GmbH 52074 Aachen (DE)**

(72) Erfinder:
• **DANY, Stefan**
  **40476 Düsseldorf (DE)**
• **PROTE, Jan-Philipp**
  **52062 Aachen (DE)**
• **SCHNEIDER, Waldemar**
  **73732 Esslingen (DE)**

(74) Vertreter: **Nußbaum, Christopher Patentanwaltskanzlei Nußbaum Marktler Straße 15 B 84489 Burghausen (DE)**

(56) Entgegenhaltungen:
**WO-A1-2019/041383     US-A1- 2003 207 156**

(52) Gemeinsame Patentklassifikation (CPC): (Forts.)
B60L 2240/36; B60L 2240/547; B60L 2240/60;
B60L 2240/80; B60L 2250/18; H01M 2220/20;
H01M 2250/20; Y02E 60/10; Y02E 60/50;
Y02T 10/62; Y02T 10/70; Y02T 10/72; Y02T 90/16;
Y02T 90/40

**Beschreibung**

Die vorliegende Erfindung betrifft eine Schaltungsanordnung für ein Bordnetz eines elektrisch angetriebenen Kraftfahrzeugs, ein elektrisch angetriebenes Kraftfahrzeug mit einer solchen Schaltungsanordnung sowie ein Verfahren zum Betreiben einer derartigen Schaltungsanordnung.

Elektrisch angetriebene Kraftfahrzeuge weisen aufgrund der momentan gegebenen Energiedichte von Hochvoltbatterien oftmals noch eine relativ begrenzte Reichweite auf. Zur Reichweitenverlängerung ist es an sich bekannt, sogenannte Range-Extender in Elektrofahrzeugen zu verwenden, um die Reichweite zu erhöhen. Die zurzeit am häufigsten eingesetzten Range-Extender weisen Verbrennungsmotoren auf, die einen Generator antreiben, der wiederum die Hochvoltbatterie und/oder die elektrische Antriebsmaschine Elektromotor mit Strom versorgt.

Darüber hinaus sind auch Range-Extender bekannt, die eine Vielzahl von Brennstoffzellen aufweisen. Ein Vorteil dieser Range-Extender liegt darin, dass diese quasi emissionsfrei sind, da üblicherweise Wasserstoff und Sauerstoff zu Wasser reagieren. Normalerweise erfordern solche auf Brennstoffzellen basierende Range-Extender einen oder mehrere Verdichter, um den Brennstoffzellen verdichtete Luft zuzuführen. Die Verdichter müssen relativ aufwendig an den jeweiligen Range-Extender angepasst werden. Ferner ist die elektrische Verschaltung solcher auf Brennstoffzellen basierender Range-Extender mit einer Hochvoltbatterie relativ kostenaufwendig.

Die US 2003/207156 A1 zeigt ein Hybridfahrzeug mit einer Traktionsbatterie zum Bereitstellen von Energie für einen Elektromotor des Hybridfahrzeugs sowie mit einer Brennstoffzelle, die sowohl Energie für den Elektromotor als auch Energie zum Aufladen der Traktionsbatterie bereitstellen kann.

Die WO 2019/041383 A1 beschreibt eine Range-Extender-Einheit für ein Fahrzeug, die ein Batteriesystem des Fahrzeugs laden und währenddessen das Fahrzeug mit Energie versorgen kann.

Es ist daher die Aufgabe der vorliegenden Erfindung, eine Lösung bereitzustellen, mittels welcher auf Brennstoffzellen basierende Range-Extender besonders einfach und unproblematisch zur Reichweitenverlängerung eines elektrisch angetriebenen Kraftfahrzeugs eingesetzt werden können.

Diese Aufgabe wird durch die Gegenstände der unabhängigen Ansprüche gelöst. Weitere mögliche Ausgestaltungen der Erfindung sind in den abhängigen Ansprüchen angegeben.

Die erfindungsgemäße Schaltungsanordnung für ein Bordnetz eines elektrisch angetriebenen Kraftfahrzeugs umfasst eine Hochvoltbatterie zur Energieversorgung einer elektrischen Antriebsmaschine des Kraftfahrzeugs. Des Weiteren umfasst die Schaltungsanordnung einen zum Aufladen der Hochvoltbatterie ausgelegten Range-Extender, aufweisend mehrere gleiche Brennstoffzellen-Grundmodule mit jeweils mehreren in Reihe geschalteten Brennstoffzellen und Schnittstellen zum Zuführen von Reaktanten in Form von Wasserstoff und Luft. Die Schnittstellen können zudem auch dazu ausgelegt sein, Wasser und Restgas aus den Brennstoffzellen-Grundmodulen abzuführen.

Der Range-Extender kann auf einem modularen Range-Extender-System basieren, welches mehrere, insbesondere gleich aufgebaute, Brennstoffzellen-Grundmodule umfasst, die jeweils mehrere in Reihe geschaltete Brennstoffzellen und Schnittstellen zum Zuführen von Wasserstoff und Luft sowie zum Abführen von Wasser und Restgas aufweisen. Des Weiteren umfasst das modulare Range-Extender-System eine Medienversorgungseinrichtung, welche dazu ausgelegt ist, Luft und Wasserstoff über die Schnittstellen den Brennstoffzellen-Grundmodulen zuzuführen und Wasser sowie Restgas über die Schnittstellen aus den Brennstoffzellen-Grundmodulen abzuführen. Zur Bereitstellung verschiedener Leistungen und/oder Spannungen sind unterschiedliche Anzahlen der Brennstoffzellen-Grundmodule in unterschiedlichen Reihen- und/oder Parallelschaltungen elektrisch miteinander verbindbar sowie mit der Medienversorgungseinrichtung zu jeweiligen Varianten eines Range-Extenders konfigurierbar. Der Range-Extender der Schaltungsanordnung kann bestimmte auf dem Range-Extender-System basierende Konfiguration bzw. Variante sein.

Wesentlich bei dem modularen Range-Extender-System ist, dass die einzelnen Brennstoffzellen-Grundmodule durch eine entsprechende Kombination beliebig für jeden Anwendungsfall zu einem Gesamtsystem, also einer bestimmten Variante eines Rangs-Extenders, skalierbar sind. Durch entsprechende Parallelschaltung und Reihenschaltung der einzelnen Brennstoffzellen-Grundmodule können verschiedene Varianten eines Range-Extenders konfiguriert werden, die sich beispielsweise im Hinblick auf die bereitstellbare Leistung unterscheiden, aber zum Beispiel die gleiche Hochvoltspannung bereitstellen können. Natürlich ist es auch möglich, dass die Brennstoffzellen-Grundmodule so miteinander verschaltet werden, dass bei unterschiedlichen Varianten des Range-Extenders die bereitstellbaren Spannungen sich unterscheiden.

Zu den Brennstoffzellen-Grundmodulen können darüber hinaus noch verschiedenste Peripherie- und Systemkomponenten gehören, die für eine in hohem Maße eigenständige Funktion der jeweiligen Brennstoffzellen-Grundmodule in diese integriert sind. Insbesondere ist es möglich, bei einer entsprechend an eine jeweilige Randbedingung angepassten Konfiguration des modularen Range-Extender-Systems eine besonders hohe Lebensdauer und Effizienz bei der betreffenden Variante des Range-Extenders zu erzielen. Dies ist unter anderem dadurch möglich, dass eine an die Randbedingung angepasste Auslegung mit definierten Betriebspunkten der betreffenden Variante des Range-Extenders erzielt werden kann. Insbesondere ist es auch möglich, die jeweiligen Varianten des Range-Extenders auf einen Teillastbereich hin auszulegen.

Die einzelnen Brennstoffzellen-Grundmodule können beispielsweise eine reaktive Fläche von ca. 100 cm$^2$ und ca. 80 Brennstoffzellen aufweisen. Natürlich ist es auch möglich, die Anzahl und Fläche der Bipolarplatten sowie die Anzahl der Brennstoffzellen anders zu gestalten. Die je Brennstoffzellen-Grundmodul in Reihe geschalteten Brennstoffzellen können beispielsweise eine Leerlaufspannung von 80 V und eine Spannung von 48 V im Volllastbetrieb bereitstellen. Je nach Auslegung der Brennstoffzellen-Grundmodule sind aber auch andere Leerlaufspannungen und andere Betriebspunkte möglich.

Mittels des modularen Range-Extender-Systems ist es beispielsweise möglich, ganz unterschiedliche Varianten eines auf Brennstoffzellen basierenden Range-Extenders für ganz verschiedene Fahrzeugtypen zu konfigurieren. So kann beispielsweise eine besonders leistungsstarke Variante eines Range-Extenders für ein elektrisch angeriebenes Nutzfahrzeug bereitgestellt werden, genauso ist es möglich, beispielsweise eine weniger leistungsstarke Variante eines Range-Extenders für einen elektrische angetriebenen Kleinwagen basierend auf den gleichen Brennstoffzellen-Grundmodulen zu konfigurieren. Die einzelnen Brennstoffzellen-Grundmodule müssen nur einmal entwickelt, getestet und freigegeben werden. Anschließend können die besagten unterschiedlichen Varianten der Range-Extender auf Basis der vorzugsweise standardisierten Brennstoffzellen-Grundmodule konfiguriert werden.

Insbesondere ist es auf Basis des modularen Range-Extender-Systems möglich, für eine bestimmtes Elektrofahrzeug einen Range-Extender auf Brennstoffzellenbasis zu konfigurieren, der ohne eine Zwischenschaltung eines Gleichspannungswandlers parallel zu einer Hochvoltbatterie des Elektrofahrzeugs geschaltet werden kann. Die üblicherweise ziemlich kostenintensive Gleichspannungswandler kann also entfallen. Denn die Spannungslage des entsprechend konfigurierten Range-Extenders auf Basis des modularen Range-Extender-Systems kann ganz einfach die Spannungslage der betreffenden Hochvoltbatterie angepasst werden, indem einfach die einzelnen Brennstoffzellen-Grundmodulen passend in Reihen- und Parallelschaltungen miteinander verbunden werden.

Zudem umfasst die Schaltungsanordnung eine Schalteinrichtung zum Zuschalten des Range-Extenders, welche dazu ausgelegt ist, die Hochvoltbatterie und den Range-Extender ohne einen Gleichspannungswandler in Form einer Parallelschaltung elektrisch leitend miteinander zu verbinden. Mit anderen Worten umfasst die Schaltungsanordnung also keinen Gleichspannungswandler, um jeweilige Spannungen der Hochvoltbatterie und des Range-Extenders aneinander anzupassen. Eine jeweilige Spannungslage des Range-Extenders ergibt sich also bei zugeschaltetem Range-Extender durch die jeweilige Spannungslage der Hochvoltbatterie, welche unter anderem vom Ladezustand, also dem sogenannten State of Charge, der Hochvoltbatterie bestimmt wird.

Die erfindungsgemäße Schaltungsanordnung umfasst zudem eine Steuereinrichtung, welche dazu eingerichtet ist, folgende Schritte durchzuführen, nachdem diese ein Aktivierungssignal betreffend den Range-Extender erhalten hat:

- Ermitteln eines Betriebspunkts des Range-Extenders in Abhängigkeit von wenigstens einer Größe der Hochvoltbatterie;
- Festlegen eines jeweiligen Sollwerts betreffend eine Zufuhr der Reaktanten zu den Brennstoffzellen-Grundmodulen und/oder eine Betriebstemperatur der Brennstoffzellen basierend auf dem ermittelten Betriebspunkt;
- Ansteuern eines zum Bereitstellen der Reaktanten und/oder zum Temperieren der Brennstoffzellen ausgelegten Systems entsprechend des jeweils festgelegten Sollwerts;
- Ansteuern der Schalteinrichtung zum Zuschalten des Range-Extenders, erst nachdem der jeweilige Sollwert betreffend die Zufuhr der Reaktanten und/oder die Betriebstemperatur erreicht worden ist.

Dadurch, dass die erfindungsgemäße Schaltungsanordnung auf einen Gleichspannungswandler verzichtet, ist es wesentlich, dass der Range-Extender vor dem Zuschalten bzw. spätestens zum Zeitpunkt des Zuschaltens die entsprechend erforderlichen Reaktanten zur Verfügung hat und/oder die Brennstoffzellen des Range-Extenders eine hinreichende Betriebstemperatur aufweisen. Die Steuereinrichtung kann dazu ausgelegt sein, beispielsweise von einer Sensoreinrichtung des Kraftfahrzeugs verschiedenste Daten zu verschiedensten Größen der Hochvoltbatterie zu empfangen und auszuwerten. Ebenfalls kann die Steuereinrichtung von dieser Sensoreinrichtung Temperaturdaten bezüglich der Brennstoffzellen erhalten.

Der Erfindung liegt die Erkenntnis zugrunde, dass der Betriebspunkt des Range-Extenders maßgeblich von verschiedenen Größen der Hochvoltbatterie abhängt, insbesondere da die Schaltungsanordnung keinen Gleichspannungswandler aufweist. Die Hochvoltbatterie ist also im Hinblick auf einen jeweiligen Betriebspunkt des Range-Extenders zum Zeitpunkt des Zuschaltens des Range-Extenders und auch danach führend im Hinblick auf eine sich beim zugeschalteten Range-Extender einstellende Spannung und somit auch im Hinblick auf einen sich einstellenden Betriebspunkt des Range-Extenders. Die an der Hochvoltbatterie anliegende Spannung hängt unter anderem maßgeblich vom State of Charge der Hochvoltbatterie ab. Die an der Hochvoltbatterie anliegende Spannung kann darüber hinaus beispielsweise auch davon abhängen, ob die Hochvoltbatterie gerade entladen oder - beispielsweise aufgrund einer Rekuperation - aufgeladen wird.

Die Steuereinrichtung ist dazu eingerichtet, nach dem Empfangen des Aktivierungssignals betreffend den Range-Extender wenigstens eine Größe der Hochvoltbatterie, vorzugsweise mehrere Größen der Hochvoltbatterie, auszuwerten und in Abhängigkeit davon einen zugehörigen Betriebspunkt des Range-Extenders zu ermitteln. Basierend auf dem ermittelten Betriebspunkt des Range-Extenders kann die Steuereinrichtung einen jeweiligen Sollwert betreffend eine Zufuhr der Reaktanten, also des Wasserstoffs und der Luft, festlegen, die erforderlich sind, damit die Brennstoffzellen-Grundmodule und somit der Range-Extender zuverlässig im ermittelten Betriebspunkt werden können. Der Erfindung liegt in diesem Zusammenhang die Erkenntnis zugrunde, dass die Bereitstellung und Zufuhr der besagten Reaktanten zu den jeweiligen Brennstoffzellen-Grundmodulen bis hin zu den jeweiligen Brennstoffzellen eine gewisse Trägheit aufweist. Ebenso gilt dies für die passende Einstellung der Betriebstemperatur der Brennstoffzellen, insbesondere abgestimmt auf den ermittelten Betriebspunkt. Die Reaktionen innerhalb der jeweiligen Brennstoffzellen hängen maßgeblich von deren momentanen Temperatur ab. Insbesondere bei niedrigen Außentemperaturen kann der Fall eintreten, dass die Brennstoffzellen eine sehr niedrige Temperatur aufweisen, welche weit unterhalb von einer günstigen Betriebstemperatur liegen kann, damit der Range-Extender für den ermittelten Betriebspunkt einsatzbereit wäre.

Die Steuereinrichtung kann noch vor dem Zuschalten des Range-Extenders ein System ansteuern, welches dazu ausgelegt ist, die Reaktanten bereitzustellen und den jeweiligen Brennstoffzellen-Grundmodulen zuzuführen. Das System kann zudem auch dazu ausgelegt sein, die jeweiligen Brennstoffzellen zu temperieren, insbesondere sowohl zu kühlen als auch aufzuheizen. Die Steuereinrichtung ist dazu eingerichtet, die Schalteinrichtung zum Zuschalten des Range-Extenders erst dann anzusteuern, nachdem der jeweilige Sollwert betreffend die Zufuhr der Reaktanten und/oder die Betriebstemperatur erreicht worden ist.

Dadurch, dass die Steuereinrichtung zur Durchführung der besagten Schritte eingerichtet ist, ist es auch ohne einen Gleichspannungswandler problemlos möglich, den Range-Extender und die Hochvoltbatterie in Parallelschaltung zu betreiben. Denn dadurch, dass die Steuereinrichtung den Betriebspunkt des Range-Extenders in besagter Weise ermitteln und die Sollwerte basierend darauf einstellen kann, kann die Steuereinrichtung durch entsprechende Ansteuerung des zum Bereitstellen der Reaktanten und/oder zum Temperieren der Brennstoffzellen ausgelegten Systems dafür sorgen, dass spätestens zum Zeitpunkt des Zuschaltens des Range-Extenders dieser die entsprechenden Reaktanten zur Verfügung gestellt bekommt und/oder die Betriebstemperatur aufweist, sodass der Range-Extender ohne Schaden zu nehmen im ermittelten Betriebspunkt betrieben werden kann.

Nach dem Zuschalten des Range-Extenders kann also auf jeden Fall sichergestellt werden, dass die jeweiligen Brennstoffzellen in ausreichendem Maße mit den Reaktanten versorgt werden, sodass insbesondere eine zumindest im Wesentlichen homogene Bereitstellung der Reaktanten an den jeweiligen Brennstoffzellen sichergestellt werden kann. Die jeweiligen Reaktionen innerhalb der Brennstoffzellen können dadurch bezogen auf die Brennstoffzellen selbst und auch bezogen auf den gesamten Range-Extender zumindest nahezu gleichartig ablaufen. Einer übermäßigen Beanspruchung und gegebenenfalls einer Schädigung des Range-Extender kann somit zuverlässig entgegengewirkt werden. Zudem ist der Range-Extender gleich nach dem Zuschalten dadurch in der Lage, die Hochvoltbatterie in ausreichendem Maße aufzuladen, und zwar ohne dass der Range-Extender dadurch einen Schaden nimmt. Durch Sicherstellung der passenden Betriebstemperatur innerhalb der jeweiligen Brennstoffzellen, kann zudem sichergestellt werden, dass die temperaturabhängigen Reaktionen innerhalb der Brennstoffzellen so ablaufen können, dass einerseits die Hochvoltbatterie zuverlässig aufgeladen wird und andererseits der Range-Extender nicht beschädigt wird.

Die Steuereinrichtung ist also dazu eingerichtet, beispielsweise anhand von aktuellen Ist-Daten betreffend eine oder auch mehrere Größen der Hochvoltbatterie einen zugehörigen Betriebspunkt des Range-Extenders für einen dann noch in Zukunft liegenden Zuschaltzeitpunkt des Range-Extenders zu ermitteln bzw. abzuschätzen. Passend zum ermittelten Betriebspunkt kann die erforderliche Menge an Reaktanten und/oder die erforderliche Betriebstemperatur innerhalb der Brennstoffzellen mittels der Steuereinrichtung ermittelt werden. Dadurch, dass die Steuereinrichtung die Zufuhr der Reaktanten und/oder die Temperierung der Brennstoffzellen abgestimmt auf den ermittelten Betriebspunkt einstellen kann und das Zuschalten des Range-Extenders erst dann bewirkt, wenn die jeweiligen Sollwerte erreicht worden sind, kann unmittelbar nach dem Zuschalten des Range-Extenders besonders einfach und unproblematisch sichergestellt werden, dass durch diesen eine Reichweitenverlängerung des betreffenden elektrisch angetriebenen Kraftfahrzeugs realisiert werden kann.

Insbesondere kann sichergestellt werden, dass zum Zeitpunkt des Zuschaltens des Range-Extenders eine an diesem anliegende Spannung zumindest im Wesentlichen derjenigen Spannung entspricht, die an der Hochvoltbatterie anliegt. Wird also die Schalteinrichtung zum Zuschalten des Range-Extenders durch entsprechende Ansteuerung durch die Steuereinrichtung betätigt, so wird auch ohne besagten Gleichspannungswandler sichergestellt, dass der Range-Extender und die Hochvoltbatterie zumindest im Wesentlichen das gleiche Spannungsniveau aufweisen. Durch auf den ermittelten Betriebspunkt abgestimmte Zurverfügungstellung der Reaktanten innerhalb der jeweiligen Brennstoffzellen, insbesondere in Kombination mit der passenden Temperierung der Brennstoffzellen vorab, kann die Leistungsabgabe des Range-Extenders unmittelbar nach dem Zuschalten des Range-Extenders passend für den Ladebedarf der Hochvoltbatterie eingestellt werden.

Die erfindungsgemäße Schaltungsanordnung weist aufgrund der Einsparung bzw. aufgrund des Weglassens des Gleichspannungswandlers einen besonders einfachen und somit kostengünstigen Aufbau auf. Durch die beschriebenen Eigenschaften der Steuereinrichtung ist es dennoch möglich, den Range-Extender bei Bedarf problemlos zum Laden der Hochvoltbatterie und somit zur Reichweitenverlängerung des betreffenden Kraftfahrzeugs zuzuschalten. Eine an sich systemimmanente Trägheit des auf Brennstoffzellen basierenden Range-Extenders im Vergleich zur Hochvoltbatterie kann durch rechtzeitige Bereitstellung der Reaktanten und/oder durch rechtzeitige Einstellung der passenden Betriebstemperatur der Brennstoffzellen, und zwar vor dem Zuschalten des Range-Extenders, ausgeglichen werden. Zum Zeitpunkt des Zuschaltens kann der Range-Extender somit abgestimmt auf den momentanen Zustand der Hochvoltbatterie direkt im dazu passenden Betriebspunkt betrieben werden. Dadurch ist es u.a. möglich, ohne eine übermäßige Belastung und/oder Schädigung des Range-Extenders diesen zur Reichenweitenverlängerung zuzuschalten, wann immer es erforderlich ist. Dabei ist es unerheblich, ob das Aktivierungssignal betreffend den Range-Exender aufgrund eines Aktivierungswunschs des Fahrers oder automatisch generiert wird.

Eine mögliche Ausführungsform der Erfindung sieht vor, dass die Steuereinrichtung dazu eingerichtet ist, jeweilige Volumenströme des Wasserstoffs und der Luft zu den Brennstoffzellen-Grundmodulen zu überwachen und erst dann die Schalteinrichtung zum Zuschalten des Range-Extenders anzusteuern, wenn die Volumenströme den vorgegebenen Sollwerten entsprechen. Mit anderen Worten ist es also möglich, dass besagte Sollwerte bezüglich der Reaktanten Sollwerte im Hinblick auf jeweilige Volumenströme des Wasserstoffs und der Luft zu den einzelnen Brennstoffzellen-Grundmodulen betreffen. Die Steuereinrichtung kann dabei beispielsweise mittels der zuvor bereits erwähnten Sensoreinrichtung mit entsprechenden Daten versorgt werden, welche die jeweiligen und momentanen Volumenströme der Reaktanten zu den Brennstoffzellen-Grundmodulen charakterisieren. Beispielsweise ist es so möglich, jeweilige Volumenströme der Reaktanten direkt an den besagten Schnittstellen der Brennstoffzellen-Grundmodule zu erfassen und diesbezügliche Daten der Steuereinrichtung bereitzustellen. Erst wenn die Steuereinrichtung feststellt bzw. ermittelt, dass besagte Volumenströme den vorgegebenen Sollwerten entsprechen, steuert die Steuereinrichtung die Schalteinrichtung zum Zuschalten des Range-Extenders an. So kann zuverlässig sichergestellt werden, dass die einzelnen Brennstoffzellen der Brennstoffzellen-Grundmodule zum Zeitpunkt des Zuschaltens des Range-Extenders abgestimmt auf den ermittelten Betriebspunkt des Range-Extenders in ausreichendem Maße mit den Reaktanten versorgt werden.

Eine weitere mögliche Ausführungsform der Erfindung sieht vor, dass die Steuereinrichtung dazu eingerichtet ist, eine Differenz zwischen einer Ist-Temperatur der Brennstoffzellen und dem festgelegten Sollwert betreffend die Betriebstemperatur der Brennstoffzellen zu ermitteln sowie in Abhängigkeit von der ermittelten Differenz eine Temperatur und/oder einen Volumenstrom eines Fluids einer Temperiereinrichtung des Range-Extenders einzustellen. Die Temperiereinrichtung kann Bestandteil des zuvor bereits erwähnten Systems sein, das dazu ausgelegt ist, die Brennstoffzellen zu temperieren. Die zuvor bereits erwähnte Sensoreinrichtung kann beispielsweise einzelne Sensoren aufweisen, die dazu ausgelegt sind, jeweilige Ist-Temperaturen der Brennstoffzellen zu messen und diesbezügliche Daten der Steuereinrichtung bereitzustellen. In Kenntnis einer jeweiligen Abweichung zwischen den Ist-Temperaturen der Brennstoffzellen und dem festgelegten Sollwert betreffend die Betriebstemperatur der Brennstoffzellen kann die Steuereinrichtung das Fluid der Temperiereinrichtung beispielsweise auf eine solche Temperatur temperieren, dass mittels des Fluids der Sollwert hinsichtlich der Betriebstemperatur der Brennstoffzellen besonders schnell erreicht werden kann. Darüber hinaus kann die Steuereinrichtung dazu eingerichtet sein, in Abhängigkeit von der jeweiligen Temperaturabweichung von der Betriebstemperatur den Volumenstrom des Fluids der Temperiereinrichtung so einzustellen, dass die Betriebstemperatur der Brennstoffzellen besonders schnell erreicht wird. Eine üblicherweise günstige Betriebstemperatur der Brennstoffzellen kann beispielsweise im Bereich von 60°C liegen. Ist die jeweilige Differenz zwischen der Ist-Temperatur der Brennstoffzellen und dem festgelegten Sollwert betreffend die Betriebstemperatur beispielsweise besonders hoch, so kann die Steuereinrichtung zum Beispiel das Fluid der Temperiereinrichtung auf einen besonders hohen Wert einstellen und ebenso den Volumenstrom. In Folge dessen kann die Betriebstemperatur der Brennstoffzellen besonders schnell erreicht werden, sodass der Range-Extender auch besonders frühzeitig nach Eingang des Aktivierungssignals zugeschaltet werden kann.

Gemäß einer weiteren möglichen Ausführungsform der Erfindung ist es vorgesehen, dass die Steuereinrichtung dazu eingerichtet ist, in Abhängigkeit von einer Spannung der Hochvoltbatterie den Betriebspunkt des Range-Extenders zu ermitteln. Der Erfindung liegt dabei die Erkenntnis zugrunde, dass die Spannung der Hochvoltbatterie maßgeblichen Einfluss auf den Betriebspunkt des Range-Extenders hat, insbesondere da die Schaltungsanordnung auf einen Gleichspannungswandler zwischen dem Range-Extender und der Hochvoltbatterie verzichtet. In Kenntnis der momentanen Spannung der Hochvoltbatterie kann die Steuereinrichtung den zugehörigen bzw. passenden Betriebspunkt des Range-Extenders passgenau ermitteln. Dies führt wiederum dazu, dass die Zufuhr und Bereitstellung der Reaktanten und/oder der Betriebstemperatur der Brennstoffzellen noch vor dem Zuschalten des Range-Extenders passgenau an die aktuelle Spannungslage der Hochvoltbatterie angepasst werden kann.

Eine weitere mögliche Ausführungsform der Erfindung sieht vor, dass die Steuereinrichtung dazu eingerichtet ist, in Abhängigkeit von einem Ladezustand der Hochvoltbatterie den Betriebspunkt des Range-Extenders zu ermitteln. Üblicherweise hängt die an der Hochvoltbatterie anliegende Spannung maßgeblich auch vom Ladezustand der Hochvoltbatterie ab. Aufgrund des Weglassens des Gleichspannungswandlers ist es somit wesentlich, den Ladezustand der Hochvoltbatterie zu kennen, um so den passenden Betriebspunkt des Range-Extenders zu ermitteln. Der Ladezustand der Hochvoltbatterie kann beispielsweise wiederum durch Spannungsmessung an der Hochvoltbatterie bestimmt werden.

Eine weitere mögliche Ausführungsform der Erfindung sieht vor, dass die Steuereinrichtung dazu eingerichtet ist, in Abhängigkeit von einem Betriebszustand der Hochvoltbatterie den Betriebspunkt des Range-Extenders zu ermitteln und/oder die Sollwerte festzulegen. Der Erfindung liegt dabei die Erkenntnis zugrunde, dass Hochvoltbatterien während des regulären Fahrbetriebs unterschiedlichste Betriebszustände aufweisen können, beispielsweise betreffend ihre Leistungsabgabe oder Leistungsaufnahme, ebenso beispielsweise hinsichtlich einer jeweiligen Temperatur der Hochvoltbatterie. Die Steuereinrichtung kann auch dazu eingerichtet sein, verschiedenste Größen auszuwerten, welche einen jeweiligen Betriebszustand der Hochvoltbatterie charakterisieren bzw. kennzeichnen. In Kenntnis des Betriebszustands der Hochvoltbatterie ist es besonders zuverlässig möglich, den dazu passenden Betriebspunkt des Range-Extenders zu ermitteln und/oder die besagten Sollwerte abgestimmt auf den ermittelten Betriebspunkt festzulegen und somit auch rechtzeitig vor dem Zuschalten des Range-Extenders einzustellen.

Gemäß einer weiteren möglichen Ausführungsform der Erfindung ist es vorgesehen, dass die Steuereinrichtung dazu eingerichtet ist, hinsichtlich des Betriebszustands der Hochvoltbatterie zu ermitteln, ob und wie stark die Hochvoltbatterie entladen oder geladen wird. Der Erfindung liegt in dem Zusammenhang die Erkenntnis zugrunde, dass eine an der Hochvoltbatterie anliegende bzw. eine mittels dieser bereitgestellte Spannung maßgeblich davon abhängen kann, ob die Hochvoltbatterie gerade entladen oder geladen wird. Wird das betreffende Kraftfahrzeug beispielsweise gerade sehr stark beschleunigt, so wird die Hochvoltbatterie besonders stark entladen, in Folge dessen eine Spannung an der Hochvoltbatterie entsprechend absinken kann. Nimmt ein Fahrer beispielsweise seinen Fuß vom Gaspedal, so kann die Hochvoltbatterie beispielsweise durch Rekuperation geladen werden, in Folge dessen die an der Hochvoltbatterie zur Verfügung stehende bzw. anliegende Spannung im Vergleich zu einem Entladevorgang ansteigen kann. Die Steuereinrichtung erhält also Daten, die charakterisieren, ob und wie stark die Hochvoltbatterie gerade entladen oder geladen wird. Basierend darauf kann die Steuereinrichtung den zugehörigen Betriebspunkt des Range-Extenders besonders zuverlässig ermitteln bzw. abschätzen. Beispielsweise ist es auch möglich, dass der Steuereinrichtung Daten bereitgestellt werden, welche ein Fahrverhalten eines aktuellen Fahrers des Kraftfahrzeugs und/oder ein gerade befahrenes Streckenprofil kennzeichnen. In Kenntnis dieser Daten bzw. Informationen kann die Steuereinrichtung auch prädiktiv ermitteln bzw. abschätzen, ob und wie stark die Hochvoltbatterie zukünftig entladen oder geladen wird. Zudem können der Steuereinrichtung Daten bereitgestellt werden, welche charakterisieren, wie lange es dauert, die besagten Sollwerte zu realisieren. In Kombination dieser Daten bzw. Informationen kann die Steuereinrichtung den Betriebspunkt des Range-Extenders für einen möglichen Zeitpunkt des Zuschaltens des Range-Extenders besonders exakt ermitteln bzw. abschätzen, in Folge dessen wiederum die Einstellung der Sollwerte für diesen Zeitpunkt besonders passend erfolgen kann.

In weiterer möglicher Ausgestaltung der Erfindung ist es vorgesehen, dass die Steuereinrichtung dazu eingerichtet ist, in Abhängigkeit von Daten, welche ein Routenprofil des Kraftfahrzeugs und/oder ein Flottenprofil von mehreren Kraftfahrzeugen charakterisieren, den Betriebspunkt des Range-Extenders zu ermitteln und/oder die Sollwerte festzulegen. Anhand des besagten Routenprofils und/oder Flottenprofils ist es beispielsweise möglich, dass die Steuereinrichtung für noch in der Zukunft liegende Zeitpunkte abschätzen kann, wie sich unterschiedlichste Größen der Hochvoltbatterie verändern werden. Basierend darauf kann die Steuereinrichtung den dazu passenden bzw. zugehörigen Betriebspunkt des Range-Extenders besonders zuverlässig ermitteln und/oder die entsprechend zugehörigen Sollwerte festlegen. So ist es beispielsweise möglich, der Steuereinrichtung Daten bereitzustellen, welche ein Höhenprofil einer gerade mittels des Kraftfahrzeugs befahrenen Route kennzeichnen. Dadurch können zum Beispiel Informationen bereitgestellt werden, wann entlang der Route höchstwahrscheinlich das Kraftfahrzeug besonders viel Leistung von der Hochvoltbatterie abverlangen wird, oder wann die Hochvoltbatterie beispielsweise durch Rekuperation geladen werden wird. In Kenntnis dieser Daten bzw. Informationen ist es wiederum möglich, einen zugehörigen Betriebspunkt des Range-Extenders besonders exakt abzuschätzen.

Gemäß einer weiteren möglichen Ausführungsform der Erfindung ist es vorgesehen, dass die Steuereinrichtung dazu eingerichtet ist, in Abhängigkeit von Daten, welche ein Fahrverhalten eines Fahrers des Kraftfahrzeugs charakterisieren, den Betriebspunkt des Range-Extenders zu ermitteln und/oder die Sollwerte festzulegen. In Kenntnis des Fahrverhaltens des Fahrers ist es für die Steuereinrichtung möglich, besonders zuverlässig einen Leistungsbedarf des Kraftfahrzeugs abzuschätzen, und somit auch einen Leistungsbedarf hinsichtlich der Hochvoltbatterie und/oder des Range-Extenders. So kann die Steuereinrichtung besonders gut prädiktiv abschätzen bzw. ermitteln, wie der Betriebspunkt des Range-Extenders für den Zuschaltzeitpunkt des Range-Extenders sein wird und somit die Sollwerte und/oder die Betriebstemperatur einstellen.

Eine weitere mögliche Ausführungsform der Erfindung sieht vor, dass die Steuereinrichtung dazu eingerichtet ist, die Sollwerte betreffend die Reaktanten um ein vorgegebenen Maß höher einzustellen als es für den ermittelten Betriebspunkt des Range-Extenders erforderlich ist. Dadurch kann sichergestellt werden, dass der Range-Extender in jedem Fall genügend Leistungsreserven aufweist, wenn dieser zugeschaltet wird. Sollte beispielsweise eine Leistungsanforderung des Kraftfahrzeugs nach dem Zuschalten des Range-Extenders etwas größer ausfallen als vorher von der Steuereinrichtung abgeschätzt, so kann durch die überstöchiometrische Einstellung der Sollwerte betreffend die Reaktanten hinsichtlich des ermittelten Betriebspunkts der Range-Extender dennoch genügend Leistung bereitstellen und zudem ein Spannungslevel halten bzw. aufweisen, welches dem Spannungslevel der Hochvoltbatterie entspricht.

Gemäß einer weiteren möglichen Ausführungsform der Erfindung ist es vorgesehen, dass die Steuereinrichtung dazu eingerichtet ist, nach dem Zuschalten des Range-Extenders den zuvor ermittelten Betriebspunkt mit einem sich tatsächlich einstellenden Betriebspunkt des Range-Extenders zu vergleichen und in Abhängigkeit davon die Zufuhr von Wasserstoff und Luft abgestimmt auf den tatsächlichen Betriebspunkt zu justieren. So kann sichergestellt werden, dass frühzeitig nach dem Zuschalten des Range-Extenders - sofern erforderlich - die Zufuhr der Reaktanten an den sich tatsächlich einstellenden Betriebspunkt des Range-Extenders angeglichen wird.

Gemäß einer weiteren möglichen Ausführungsform der Erfindung ist es vorgesehen, dass die Steuereinrichtung dazu eingerichtet ist, anhand einer Stromstärke, welche einen vom Range-Extender zur Hochvoltbatterie fließenden Strom charakterisiert, den sich tatsächlich einstellenden Betriebspunkt des Range-Extenders zu ermitteln. Anhand des tatsächlich vom Range-Extender zur Hochvoltbatterie fließenden Stroms ist es auf besonders zuverlässige Weise möglich, den sich tatsächlich einstellenden Betriebspunkt des Range-Extenders zu ermitteln.

Eine weitere mögliche Ausführungsform der Erfindung sieht vor, dass die Steuereinrichtung dazu eingerichtet ist, einen Zustand der Brennstoffzellen-Grundmodule zu ermitteln und für jeweilige Gruppen von parallelgeschalteten Brennstoffzellen-Grundmodulen unterschiedliche Sollwerte je nach Zustand ihrer Brennstoffzellen-Grundmodule vorzugeben. Der Zustand kann beispielsweise eine jeweilige Temperatur und/oder einen jeweiligen Alterungszustand der Brennstoffzellen-Grundmodule umfassen. Der Erfindung liegt in diesem Zusammenhang die Erkenntnis zugrunde, dass die Temperatur einen exponentiellen Einfluss auf die in den Brennstoffzellen ablaufenden Reaktionen und somit auch auf die Spannungsausbildung während des Betriebs der jeweiligen Brennstoffzellen aufweist. Der Erfindung liegt in diesem Zusammenhang zudem auch die Erkenntnis zugrunde, dass der jeweilige Alterungszustand der Brennstoffzellen und somit der zugehörigen Brennstoffzellen-Grundmodule einen wesentlichen Einfluss auf die Leistungsfähigkeit und somit auch auf die Spannungsausbildung aufweist. Die jeweiligen Gruppen der parallelgeschalteten Brennstoffzellen-Grundmodule können also noch vor dem Zuschalten des Range-Extenders passgenau für ihren jeweiligen Zustand mit der entsprechenden Menge der Reaktanten versorgt werden und/oder hinsichtlich ihrer Betriebstemperatur passend auf ihren jeweiligen Zustand temperiert werden. So kann sichergestellt werden, dass die jeweiligen Gruppen der parallelgeschalteten Brennstoffzellen-Grundmodule insbesondere hinsichtlich ihrer Spannung gleich eingestellt werden. Dies trägt wiederum dazu bei, dass die einzelnen Brennstoffzellen möglichst wenig strapaziert werden.

Eine weitere mögliche Ausführungsform der Erfindung sieht vor, dass der Range-Extender gemäß folgender Formel ausgelegt ist:

$$Z_{BZ,R} = \frac{Z_{Bat,R} * U_{Z,Bat,\,min}}{U_{Z,BZ,VL}}$$

wobei

- $Z_{BZ,R}$ die Anzahl aller in Reihe geschalteter Brennstoffzellen des Range-Extenders bezeichnet,
- $Z_{Bat,R}$ die Anzahl aller in Reihe geschalteter Batteriezellen der Hochvoltbatterie bezeichnet,
- $U_{Z,Bat,min}$ eine minimal zulässige Zellspannung der Hochvoltbatterie im Betrieb bezeichnet,
- $U_{Z,BZ,VL}$ eine Brennstoffzellenbetriebsspannung auf Zelleebene bei Volllast bezeichnet.

Eine Auslegung des Range-Extenders gemäß der o.g. Formel stellt sicher, dass die Spannungslage der Brennstoffzellen bzw. des Range-Extenders, nie unter der Spannungslage der Hochvoltbatterie liegt. Das bedeutet, dass so sichergestellt ist, dass die beiden Spannungslagen, also von Range-Extender und Hochvoltbatterie, für den zuvor beschriebenen Betriebspunkt und die Zuschaltung zueinander passen

Eine weitere mögliche Ausführungsform der Erfindung sieht vor, dass der Range-Extender gemäß folgender Formel ausgelegt ist:

$$A_{BZ} = \frac{P_M}{Z_{BZ,R}} * J_{BZ,MEA},$$

wobei

- $A_{BZ}$ eine reaktive Fläche aller Brennstoffzellen des Range-Extenders bezeichnet,
- $P_M$ einen mittleren vorgegebenen Leistungsbedarf des Kraftfahrzeugs bezeichnet,
- $Z_{BZ,R}$ wiederum die Anzahl aller in Reihe geschalteter Brennstoffzellen des Range-Extenders bezeichnet,
- $J_{BZ,MEA}$ eine maximal zugelassene Stromdichte jeweiliger Membran-ElektrodenEinheiten des Range-Extenders bezeichnet.

Eine Auslegung des Range-Extenders gemäß dieser Formel, insbesondere in Verbindung mit der zuerst genannten anderen Formel, stellt sicher, die Brennstoffzellen und somit der Range-Extender für den Anwendungsfall, also bezogen auf den vorgegebenen mittleren Leistungsbedarf des Kraftfahrzeugs, weder über- noch unterdimensioniert ist. Der Fokus liegt hier insbesondere darauf, dass der Range-Extender eine für den Anwendungsfall ausreichende Stromstärke sicherstellen kann.

Eine weitere mögliche Ausführungsform der Erfindung sieht vor, dass der mittlere vorgegebene Leistungsbedarf des Kraftfahrzeugs einen mittleren Leistungsbedarf der Antriebsmaschine des Kraftfahrzeugs für ein vorgegebenes Fahrprofil des Kraftfahrzeugs und zumindest eines Nebenverbrauchers des Kraftfahrzeugs, insbesondere einer Klimatisierungseinrichtung des Kraftfahrzeugs, umfasst. Für das vorgegebene Fahrprofil können beispielsweise Daten hinterlegt sein, welche einen zeitlich veränderlichen Leistungsbedarf der Antriebsmaschine des Kraftfahrzeugs charakterisieren, wobei beispielsweise die Steuereinrichtung basierend auf diesen Daten den besagten mittleren Leistungsbedarf der Antriebsmaschine des Kraftfahrzeugs ermitteln kann, um dem vorgegebenen Fahrprofil Rechnung tragen zu können. Zudem kann auch zumindest ein Leistungsbedarf eines Nebenverbrauchers des Kraftfahrzeugs, insbesondere in Form einer Klimatisierungseinrichtung des Kraftfahrzeugs, Berücksichtigung finden. Diesbezüglich können der Steuereinrichtung beispielsweise gemittelte Daten zur Leistungsanforderung der Klimatisierungseinrichtung des Kraftfahrzeugs bereitgestellt werden, anhand derer die Steuereinrichtung abschätzen kann, ob das Kraftfahrzeug mittels der Klimatisierungseinrichtung während der Fahrt eher geheizt oder gekühlt werden muss. Dies kann regionalen Unterschieden unterliegen. So kann der Range-Extender beispielsweise für Fahrzeugmodelle, die in unterschiedlichen Klimazonen - z.B. in Skandinavien oder Südeuropa - eingesetzt werden, unterschiedliche ausgelegt werden. Insbesondere wenn das Kraftfahrzeug gekühlt werden muss, ergibt sich ein erhöhter Leistungsbedarf für die Klimatisierungseinrichtung, da dafür beispielsweise keine Abwärme des Range-Extenders verwendet werden kann. In Kenntnis des mittleren Leistungsbedarfs der Antriebsmaschine und des Leistungsbedarfs von zumindest einem Nebenverbraucher des Kraftfahrzeugs, welcher beispielsweise besonders energiehungrig ist, kann die Auslegung des Range-Extenders besonders passend ausgelegt werden im Hinblick auf die erforderliche reaktive Fläche aller Brennstoffzellen des Wasserstoff-Range-Extenders. So kann sichergestellt werden, dass der Range-Extender weder überdimensioniert noch unterdimensioniert ist, um zur Reichweitenverlängerung des betreffenden elektrisch angetriebenen Kraftfahrzeugs beitragen zu können.

Das erfindungsgemäße elektrisch angetriebene Kraftfahrzeug umfasst die erfindungsgemäße Schaltungsanordnung oder eine vorteilhafte Ausführungsform der erfindungsgemäßen Schaltungsanordnung.

Bei dem erfindungsgemäßen Verfahren zum Betreiben der erfindungsgemäßen Schaltungsanordnung oder einer möglichen Ausführungsform der Schaltungsanordnung führt die Steuereinrichtung der Schaltungsanordnung folgende Schritte durch, nachdem diese ein Aktivierungssignal betreffend den Range-Extender erhalten hat:

- Ermitteln eines Betriebspunkts des Range-Extenders in Abhängigkeit von wenigstens einer Größe der Hochvoltbatterie;
- Festlegen eines jeweiligen Sollwerts betreffend eine Zufuhr der Reaktanten zu den Brennstoffzellen-Grundmodulen und/oder eine Betriebstemperatur der Brennstoffzellen basierend auf dem ermittelten Betriebspunkt;
- Ansteuern eines zum Bereitstellen der Reaktanten und/oder zum Temperieren der Brennstoffzellen ausgelegten Systems entsprechend des jeweils festgelegten Sollwerts;
- Ansteuern der Schalteinrichtung zum Zuschalten des Range-Extenders, erst nachdem der jeweilige Sollwert betreffend die Zufuhr der Reaktanten und/oder die Betriebstemperatur erreicht worden ist.

Mögliche Ausgestaltungen der erfindungsgemäßen Schaltungsanordnung sind als mögliche Ausgestaltungen des erfindungsgemäßen Verfahrens und umgekehrt anzusehen, wobei die Schaltungsanordnung insbesondere Mittel zur Durchführung der Verfahrensschritte aufweist.

Weitere mögliche Vorteile, Merkmale und Ausgestaltungen der Erfindung werden anhand der nachfolgenden Figuren beschrieben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

Fig. 1    eine schematische Perspektivansicht eines Brennstoffzellen-Grundmoduls, das mehrere in Reihe geschaltete Brennstoffzellen aufweist und welchem ein Verdichter zum Zuführen von Luft zugeordnet ist;

Fig. 2    eine schematische Darstellung mehrerer der Brennstoffzellen-Grundmodule, welche in Gruppen zusammengefasst in Reihe geschaltet sind, wobei einige dieser Gruppen wiederum parallel zueinander geschaltet sind;

Fig. 3    eine schematische Darstellung einer Schaltungsanordnung für ein Bordnetz eines elektrisch angetriebenen Kraftfahrzeugs, wobei die Schaltungsanordnung eine Parallelschaltung einer aus den Brennstoffzellen-Grundmodulen gebildeten Variante eines Range-Extenders und einer Hochvoltbatterie umfasst;

Fig. 4    eine schematische Darstellung eines elektrisch angetriebenen Kraftfahrzeugs, welches die Schaltungsordnung aufweist;

Fig. 5    ein Diagramm, in dem ein momentaner Leistungsbedarf des Kraftfahrzeugs über der Zeit sowie ein mittlerer Leistungsbedarf des Kraftfahrzeugs schematisch dargestellt sind;

Fig. 6    ein Diagramm, in dem ein Verlauf des State of Charge der Hochvoltbatterie des Kraftfahrzeugs dargestellt ist;

Fig. 7    ein Diagramm, in für den Range-Extender jeweilige Verläufe einer Spannung und eine Leistungsabgabe des Range-Extenders schematisch dargestellt sind.

In den Figuren sind gleiche oder funktionsgleiche Elemente mit den gleichen Bezugszeichen versehen worden.

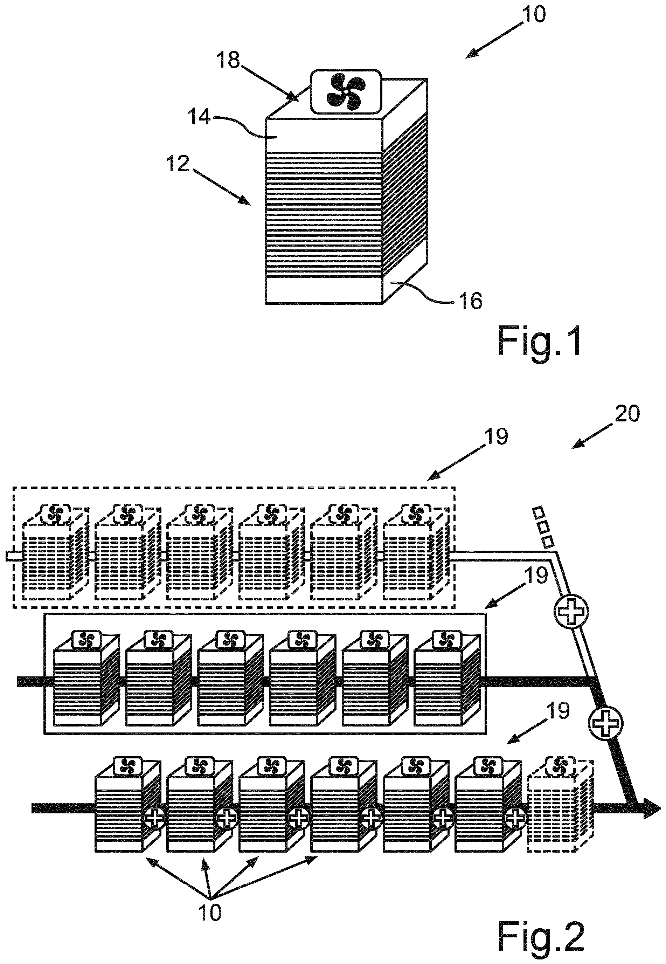

In Fig. 1 ist ein Brennstoffzellen-Grundmodul 10 in einer Perspektivansicht stark schematisiert dargestellt. Das Brennstoffzellen-Grundmodul 10 umfasst einen Stapel 12, auch Stack genannt, von mehreren in Reihe geschalteten und nicht näher bezeichneten Brennstoffzellen. Die Brennstoffzellen umfassen jeweilige Bipolarplatten und jeweilige sogenannte Membran-Elektrodeneinheiten. Das Brennstoffzellen-Grundmodul 10 umfasst zudem eine erste Endplatte 14 und eine zweite Endplatte 16, zwischen denen der Stapel 12 angeordnet ist.

Darüber hinaus umfasst das Brennstoffzellen-Grundmodul 10 mehrere hier nicht dargestellte Schnittstellen zum Zuführen von Wasserstoff und Luft sowie zum Abführen von Wasser und Restgas. Dabei kann es vorgesehen sein, dass ausschließlich die erste Endplatte 14 eine Art Plug-And-Play-Frontend bildet, welches alle Schnittstellen aufweist. Dem Brennstoffzellen-Grundmodul 10 ist zudem noch ein Luftverdichter 18 zugeordnet, der dazu dient, Luft und somit Sauerstoff zu den einzelnen Brennstoffzellen zu fördern. Entgegen der vorliegenden Darstellung ist es allerdings nicht erforderlich, dass der Luftverdichter 18 direkt am Brennstoffzellen-Grundmodul 10 angeordnet ist. Stattdessen kann es auch vorgesehen sein, dass der Luftverdichter 18 an einer ganz anderen Stelle beim Verbau im betreffenden Kraftfahrzeug angeordnet wird als das Brennstoffzellen-Grundmodul 10. Über eine entsprechende Leitung bzw. Verrohrung muss lediglich sichergestellt werden, dass der Luftverdichter 18 Luft und somit Sauerstoff zum Brennstoffzellen-Grundmodul 10 fördern kann.

In Fig. 2 sind mehrere der Brennstoffzellen-Grundmodule 10 dargestellt. Zur Bereitstellung verschiedener Leistungen und/oder Spannungen können unterschiedliche Anzahlen der Brennstoffzellen-Grundmodule 10 in unterschiedlichen Reihen- und/oder Parallelschaltungen elektrisch miteinander verbunden und mit einer hier nicht dargestellten Medienversorgungseinrichtung zu jeweiligen Varianten eines Range-Extenders konfiguriert werden. Die besagte und hier nicht dargestellte Medienversorgungseinrichtung ist dazu ausgelegt, Luft und Wasserstoff über die erwähnten Schnittstellen der jeweiligen Brennstoffzellen-Grundmodule 10 zuzuführen und Wasser sowie Restgas über die Schnittstellen aus den jeweiligen Brennstoffzellen-Grundmodulen 10 abzuführen.

Vorliegend sind mehrere Gruppen 19 von in Reihe miteinander verschalteten Brennstoffzellen-Grundmodulen 10 schematisch dargestellt. Beispielsweise können je Gruppe 19 so viele der Brennstoffzellen-Grundmodule 10 in Reihe miteinander verschaltet werden, dass diese eine Spannung von beispielsweise 480 V und eine Leistung von 24 kW bereitstellen können. Eine andere Verschaltung ist selbstverständlich ebenfalls möglich. Durch eine Parallelschaltung der einzelnen Gruppen 19 ist es möglich, bei gleichbleibender Spannung die bereitstellbare Leistung zu erhöhen. Grundsätzlich ist eine beliebige Skalierung der Leistung für jeden Anwendungsfall durch eine entsprechende Verschaltung der einzelnen Brennstoffzellen-Grundmodule 10 möglich.

Die einzelnen Brennstoffzellen-Grundmodule 10 können beispielsweise eine reaktive Fläche von ca. 100 cm$^2$ und 80 einzelnen Brennstoffzellen aufweisen. Andere Flächen und Anzahlen sind auch möglich. So ist es beispielsweise möglich, dass die jeweiligen Brennstoffzellen-Grundmodule 10 eine Leerlaufspannung von 80 V und eine Spannung von 48 V unter Volllast bereitstellen können, wobei die Brennstoffzellen-Grundmodule 10 dazu ausgelegt sein können, beispielsweise eine Leistung im Bereich von 2 bis 8 kW bereitzustellen. Andere Spannungen und Leistungen sind ebenfalls möglich, insbesondere je nach gewählten bzw. verbauten Membran-Elektrodeneinheiten in den einzelnen Brennstoffzellen-Grundmodulen 10.

Vor allem kann es vorgesehen sein, dass die Brennstoffzellen-Grundmodule 10 alle bezüglich ihrer Komponenten den gleichen Aufbau aufweisen. Die Brennstoffzellen-Grundmodule 10 bilden also hochgradig standardisierte Einheiten, in denen überall die gleichen Komponenten verbaut sind. Dadurch lassen sich hohe Skaleneffekte mit entsprechend niedrigen Einkaufsund Produktionskosten erzielen. Die einzelnen Brennstoffzellen-Grundmodule 10 sowie die erwähnte Medienversorgungseinrichtung bilden gemeinsam also ein modulares Range-Extender-System 20, wobei je nach Randbedingung bzw. Anwendungsfall die standardisierten Brennstoffzellen-Grundmodule 10 in unterschiedlichsten Konfigurationen miteinander verschaltet werden können. Die Brennstoffzellen-Grundmodule 10 können jeweils eine eigene Steuerung aufweisen, wobei diese beispielsweise auf einer gemeinsamen Hardware für eine bestimmte konfigurierte Variante eines Range-Extenders ausgeführt werden können.

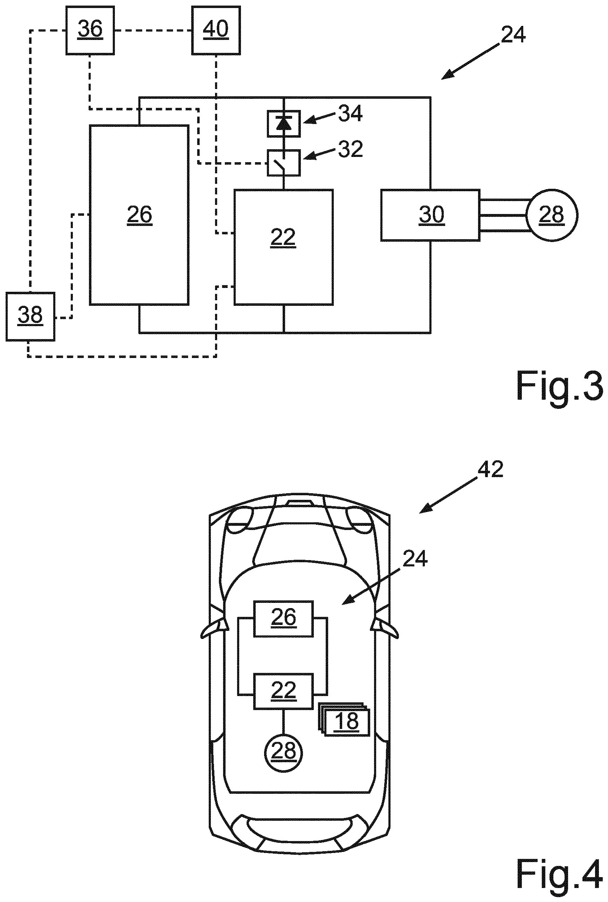

In Fig. 3 ist eine Schaltungsanordnung 24 für ein nicht näher bezeichnetes Bordnetz eines elektrisch angetriebenen Kraftfahrzeugs stark schematisiert dargestellt. Die Schaltungsanordnung 24 umfasst eine vorgegebene Variante eines Range-Extenders 22 basierend auf dem besagten modularen Range-Extender-System 20. Des Weiteren umfasst die Schaltungsanordnung 24 eine Hochvoltbatterie 26 zur Energieversorgung einer elektrischen Antriebsmaschine 28 des betreffenden Kraftfahrzeugs. Ein Frequenzumrichter 30, welcher der elektrischen Antriebsmaschine 28 zugeordnet ist, ist noch schematisch eingezeichnet. Die Hochvoltbatterie 26 und der Range-Extender 22 sind ohne einen Gleichspannungswandler in Form einer Parallelschaltung miteinander verschaltet, wobei der Range-Extender 22 dazu ausgelegt ist, die Hochvoltbatterie 26 zu laden.

Eine Schalteinrichtung 32 zum Herstellen und Trennen einer elektrisch leitenden Verbindung zwischen dem Range-Extender 22 und der Hochvoltbatterie 26 gehört ebenfalls noch zur Schaltungsanordnung 24. Bei der Schalteinrichtung 32 kann es sich beispielsweise um einen Mosfet, einen Transistor oder auch um ein mechanisches Relais handeln. Eine oder mehrere Freilaufdioden 34 können ebenfalls noch als Sicherheitselemente vorgesehen sein. Dadurch, dass die Schaltungsanordnung 24 keinen Gleichspannungswandler aufweist, können Bauraum und entsprechende Kosten eingespart werden. Durch eine entsprechend geeignete prädiktive Regelung bzw. Steuerung kann sichergestellt werden, dass beim Zuschalten des Range-Extenders 22 dieser dennoch keinen Schaden nimmt.

Die Schaltungsanordnung 24 umfasst zudem noch eine Steuereinrichtung 36. Die Steuereinrichtung 36 ist dazu eingerichtet und ausgelegt, die Schalteinrichtung 32 zu betätigen, um den Range-Extender 22 zuzuschalten, sodass der Range-Extender 22 elektrisch leitend mit der Hochvoltbatterie 26 verbunden wird. Zudem kann die Steuereinrichtung 36 die Schalteinrichtung 32 auch so betätigen, dass die elektrisch leitende Verbindung zwischen dem Range-Extender 22 und der Hochvoltbatterie 26 getrennt wird. Zudem sind noch eine Sensoreinrichtung 38 und ein System 40 zum Bereitstellen von Reaktanten und zum Temperieren der Brennstoffzellen des Range-Extenders 22 schematisch angedeutet. Die Sensoreinrichtung 38 und das System 40 müssen nicht zur Schaltungsanordnung 24 gehören, können jedoch teilweise oder vollständiger Bestandteil der Schaltungsanordnung 24 sein.

Die Steuereinrichtung 36 ist dazu eingerichtet, folgende Schritte durchzuführen, nachdem diese ein Aktivierungssignal betreffend den Range-Extender 22 erhalten hat:

- Ermitteln eines Betriebspunkts des Range-Extenders 22 in Abhängigkeit von wenigstens einer Größe der Hochvoltbatterie 26;
- Festlegen eines Sollwerts betreffend eine Zufuhr der Reaktanten, also des Wasserstoffs und der Luft, zu den Brennstoffzellen-Grundmodulen 10 (hier nicht dargestellt) des Range-Extenders 22 und/oder eine Betriebstemperatur der Brennstoffzellen des Range-Extenders 22 basierend auf dem ermittelten Betriebspunkt des Range-Extenders 22;
- Ansteuern des zum Bereitstellen der Reaktanten und/oder zum Temperieren der Brennstoffzellen ausgelegten Systems 40 entsprechend des jeweils festgelegten Sollwerts;
- Ansteuern der Schalteinrichtung 32 zum Zuschalten des Range-Extenders 22, erst nachdem der jeweilige Sollwert betreffend die Zufuhr der Reaktanten und/oder die Betriebstemperatur erreicht worden ist.

Im Hinblick auf die Reaktanten können beispielsweise jeweilige Volumenströme des Wasserstoffs und der Luft zu den Brennstoffzellen-Grundmodulen 10 des Range-Extenders 22 vorgegeben werden. Die Steuereinrichtung 36 kann diese Volumenströme überwachen und schaltet erst dann die Schalteinrichtung 32 entsprechend zum Zuschalten des Range-Extenders 22, wenn die Volumenströme den vorgegebenen Sollwerten entsprechen. Das System 40 kann beispielsweise mehrere hier nicht dargestellte Sensoren aufweisen, welche dazu ausgelegt sind, die besagten Volumenströme des Wasserstoffs und der Luft zu überwachen und diesbezügliche Daten an die Steuereinrichtung 36 zu übermitteln. Die Steuereinrichtung 36 kann basierend auf diesen Daten eine jeweilige Differenz zwischen einer Ist-Temperatur der Brennstoffzellen und dem festgelegten Sollwert betreffend die Betriebstemperatur der Brennstoffzellen ermitteln sowie in Abhängigkeit von der ermittelten Differenz eine Temperatur und/oder einen Volumenstrom eines Fluids einer hier nicht dargestellten Temperiereinrichtung des Range-Extenders 22 einstellen. Stellt die Steuereinrichtung 36 beispielsweise fest, dass die Differenz zwischen der jeweiligen Ist-Temperatur der Brennstoffzellen und dem festgelegten Sollwert betreffend die Betriebstemperatur der Brennstoffzellen besonders hoch ist, so kann die Steuereinrichtung 36 beispielsweise einen besonders hohen Volumenstrom hinsichtlich des Fluids der Temperiereinrichtung einstellen und/oder das Fluid auf eine besonders hohe Temperatur erhitzen. Dadurch ist es möglich, den Sollwert betreffend die Betriebstemperatur der Brennstoffzellen besonders schnell herzustellen.

Die Steuereinrichtung 36 kann beispielsweise in Abhängigkeit von einer Spannung der Hochvoltbatterie 26 den Betriebspunkt des Range-Extenders 22 ermitteln. Zudem kann die Steuereinrichtung 36 beispielsweise auch in Abhängigkeit von einem Ladezustand der Hochvoltbatterie 26 den Betriebspunkt des Range-Extenders 22 ermitteln. Die Kenntnis der Spannung der Hochvoltbatterie 26 noch vor dem Zuschalten des Range-Extenders 22 ist sehr wichtig, da die Schaltungsanordnung 24 keinen Gleichspannungswandler aufweist, der eventuelle Spannungsunterschiede zwischen dem Range-Extender 22 und der Hochvoltbatterie 26 ausgleichen könnte. Die Sensoreinrichtung 38 kann beispielsweise die Spannung der Hochvoltbatterie 26 messen und basierend darauf einen momentanen Ladezustand der Hochvoltbatterie 26 ermitteln und diesbezügliche Daten an die Steuereinrichtung 36 übertragen.

Zur Ermittlung des Betriebspunkts des Range-Extenders 22 noch vor dem Zuschalten des Range-Extenders 22 kann die Steuereinrichtung 36 zudem auch einen Betriebszustand der Hochvoltbatterie 26 ermitteln. Hinsichtlich des Betriebszustands der Hochvoltbatterie 26 kann die Steuereinrichtung 36 beispielsweise ermitteln, ob und wie stark die Hochvoltbatterie 26 gerade entladen oder geladen wird. Entsprechende Daten bzw. Informationen dazu kann die Sensoreinrichtung 38 beispielsweise der Steuereinrichtung 36 zur Verfügung stellen. Wird die Hochvoltbatterie 26 beispielsweise aufgrund einer Rekuperation gerade geladen, unterscheidet sich die an der Hochvoltbatterie 26 anliegende Spannung von dem Fall, dass die Hochvoltbatterie 26 gerade zur Bereitstellung von Leistung entladen wird. Vor dem Zuschalten des Range-Extenders 22 kann es also auch wichtig sein, den jeweiligen Betriebszustand der Hochvoltbatterie 26, insbesondere im Hinblick auf eine momentane Entladung oder Ladung, zu kennen. Basierend darauf kann die Steuereinrichtung 36 noch vor dem Zuschalten des Range-Extenders 22 abgestimmt auf den Betriebszustand der Hochvoltbatterie 26 den Betriebspunkt des Range-Extenders 22 entsprechend ermitteln und/oder die besagten Sollwerte festlegen.

Der Steuereinrichtung 36 können zudem auch Daten bereitgestellt werden, welche ein Routenprofil eines Kraftfahrzeugs, in welchem die Schaltungsanordnung 24 eingebaut ist, und/oder ein Flottenprofil von mehreren Kraftfahrzeugen charakterisieren. Basierend auf diesen Daten kann die Steuereinrichtung 36 auswerten, wie die Hochvoltbatterie 26 bisher beansprucht wurde und/oder wie diese noch zukünftig beansprucht werden wird, insbesondere wann diese voraussichtlich geladen bzw. entladen werden wird. In Kenntnis dieser Daten kann die Steuereinrichtung 36 ebenfalls den Betriebspunkt des Range-Extenders 22 passend dazu ermitteln und/oder die besagten Sollwerte festlegen. Daten hinsichtlich des Routenprofils des Kraftfahrzeugs können beispielsweise von einer hier nicht dargestellten Navigationseinrichtung des Kraftfahrzeugs der Steuereinrichtung 36 bereitgestellt werden. In Kenntnis dieses Routenprofils können beispielsweise weitere Flottenprofile von Fahrzeugen, welche dieselbe Route befahren haben, abgerufen werden. Basierend auf den Daten der Flottenprofile kann die Steuereinrichtung 36 noch genauer abschätzen, wann und wie die Hochvoltbatterie 26 voraussichtlich geladen und entladen werden wird.

Zudem können der Steuereinrichtung 36 auch Daten bereitgestellt werden, welche ein Fahrverhalten eines Fahrers des betreffenden Kraftfahrzeugs charakterisieren, in dem die Schaltungsanordnung 24 verbaut ist. Basierend auf diesen, das Fahrverhalten des Fahrers charakterisierenden Daten kann die Steuereinrichtung 36 ebenfalls den Betriebspunkt des Range-Extenders 22 ermitteln und/oder die besagten Sollwerte festlegen. In Kenntnis des Fahrverhaltens des Fahrers ist es insbesondere möglich, sein noch in der Zukunft liegendes Fahrverhalten abzuschätzen, von dem maßgeblich abhängen kann, wie stark die Hochvoltbatterie 26 entladen und/oder rekuperiert wird.

Die Steuereinrichtung 36 kann zudem die besagten Sollwerte hinsichtlich der bereitzustellenden Reaktanten und/oder der Betriebstemperatur der Brennstoffzellen um ein vorgegebenes Maß höher einstellen, als es für den ermittelten Betriebspunkt des Range-Extenders 22 erforderlich ist. Im Hinblick auf die Reaktanten kann die Steuereinrichtung 36 für den Zeitpunkt des Zuschaltens des Range-Extenders 22 also eine überstöchiometrische Vorgabe auswählen, sodass nach dem Zuschalten des Range-Extenders 22 diesem mehr Reaktanten bereitgestellt werden, als es für den ermittelten Betriebspunkt notwendig ist. Ebenso kann die Betriebstemperatur der Brennstoffzellen etwas höher gewählt werden, sodass die daraus resultierende Reaktionen innerhalb der Brennstoffzellen schneller ablaufen kann, als es für den ermittelten Betriebspunkt erforderlich wäre. Dadurch wird eine Art Puffer geschaffen, sodass der Range-Extender 22 im Bedarfsfall ad hoc mehr Leistung zum Laden der Hochvoltbatterie 26 bereitstellen kann, falls dies erforderlich sein sollte.

Nach dem Zuschalten des Range-Extenders 22 durch entsprechende Ansteuerung der Schalteinrichtung 32 kann die Steuereinrichtung 36 den zuvor ermittelten Betriebspunkt mit einem sich tatsächlich einstellenden Betriebspunkt des Range-Extenders 22 vergleichen und in Abhängigkeit davon die Zufuhr der Reaktanten abgestimmt auf den tatsächlichen Betriebspunkt justieren. Zum Beispiel kann die Steuereinrichtung 36 anhand einer Stromstärke, welche einen vom Range-Extender 22 zur Hochvoltbatterie 26 fließenden Strom charakterisiert, den sich tatsächlich einstellen Betriebspunkt des Range-Extenders 22 ermitteln. Nach dem Zuschalten des Range-Extenders 22 kann die Steuereinrichtung 36 also insbesondere die Zufuhr der Reaktanten sehr schnell so regeln bzw. einstellen, dass sich der tatsächlich einstellende Betriebspunkt des Range-Extenders 22 aufrechterhalten werden kann, und zwar ohne dass zu viel der Reaktanten zugeführt wird.

Die Steuereinrichtung 36 kann zudem auch einen Zustand der Brennstoffzellen-Grundmodule 10 ermitteln und für jeweilige Gruppen 19 (siehe Fig. 2) von parallelgeschalteten Brennstoffzellen-Grundmodulen 10 unterschiedliche Sollwerte je nach Zustand ihrer Brennstoffzellen-Grundmodule 10 vorgeben. Dies geschieht wiederum noch vor dem Zuschalten des Range-Extenders 22. Im Hinblick auf besagten Zustand der Brennstoffzellen-Grundmodule 10 kann die Steuereinrichtung 36 beispielsweise eine jeweilige Temperatur und/oder einen jeweiligen Alterungszustand der Brennstoffzellen-Grundmodule 10 des Range-Extenders 22 berücksichtigen. Insbesondere die jeweilige Temperatur der Brennstoffzellen hat einen sehr starken Einfluss auf die Reaktionen innerhalb der Brennstoffzellen und somit auf deren Spannungsausbildung.

In Fig. 4 ist ein elektrisch angetriebenes Kraftfahrzeug 42 schematisiert dargestellt. Ein Teil der Schaltungsanordnung 24 ist ebenfalls schematisch eingezeichnet. Mehrere der zuvor erwähnten Luftverdichter 18 sind ebenfalls schematisch eingezeichnet. Die Luftverdichter 18 sind den einzelnen nicht dargestellten Brennstoffzellen-Grundmodulen 10 der betreffenden bzw. konfigurierten Variante des Range-Extenders 22 zugeordnet. Über entsprechende Kanäle bzw. Leitungen können die Luftverdichter 18 angesaugte Luft zu den einzelnen Brennstoffzellen-Grundmodulen 10 befördern. Die Luftverdichter 18 müssen dabei -wie bereits erwähnt - nicht direkt an den Brennstoffzellen-Grundmodulen 10 angeordnet sein. Stattdessen können die Luftverdichter 18 an anderen geeigneten Stellen im Kraftfahrzeug 42 angeordnet werden, insbesondere dort, wo die Platzverhältnisse es besonders gut zulassen und gleichzeitig mittels der Luftverdichter 18 besonders gut Umgebungsluft angesaugt werden kann.

Die einzelnen Brennstoffzellen-Grundmodule 10 können wiederum im Hinblick auf einen günstigen Fahrzeugschwerpunkt und ein günstiges Packaging an anderer Stelle im Kraftfahrzeug 42 angeordnet werden. Die einzelnen Luftverdichter 18 können beispielsweise in Form eines Verdichtermoduls zusammengefasst werden. Je nach Konfiguration des Range-Extenders 22 und vor allem je nach Anzahl der darin verbauten Brennstoffzellen-Grundmodule 10 kann die Anzahl der einzusetzenden Luftverdichter 18 variieren. Die Anzahl der Luftverdichter 18 entspricht dabei genau der Anzahl der Brennstoffzellen-Grundmodule 10.

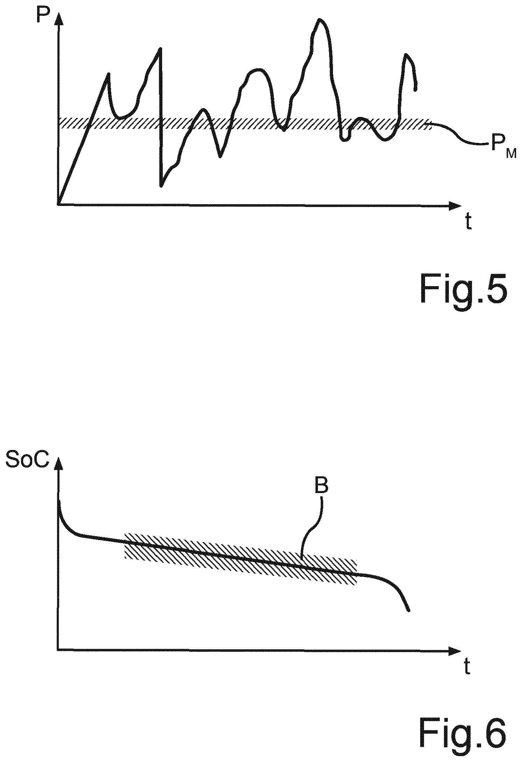

In Fig. 5 ist ein Diagramm gezeigt, in dem ein momentaner Leistungsbedarf P des Kraftfahrzeugs 42 über der Zeit t sowie ein mittlerer Leistungsbedarf $P_M$ des Kraftfahrzeugs 42 schematisch dargestellt sind. Der momentane Leistungsbedarf P des Kraftfahrzeugs 42 kann beispielsweise einen Leistungsbedarf der elektrischen Antriebsmaschine 28 sowie eines oder mehrerer Nebenverbraucher des Kraftfahrzeugs 42 umfassen. Bei den Nebenverbrauchern kann es sich beispielsweise um eine Klimatisierungseinrichtung des Kraftfahrzeugs, also z.B. um eine Klimaanlage, um ein Infotainmentsystem oder um beliebige weitere Verbraucher handeln, die nicht unmittelbar dazu dienen, das Kraftfahrzeug 42 anzutreiben. In den mittleren Leistungsbedarf $P_M$ fließen also nicht nur der reine Leistungsbedarf der elektrischen Antriebsmaschine 28 sondern beispielsweise auch sämtliche Leistungsbedarfe aller Nebenverbraucher des Kraftfahrzeugs 42 ein. Die Kenntnis des mittleren Leistungsbedarfs $P_M$ kann zur Auslegung des Range-Extenders 22 herangezogen werden. Der Range-Extender 22 kann gemäß folgender Formel ausgelegt sein.

$$A_{BZ} = \frac{P_M}{Z_{BZ}} * J_{BZ,MEA},$$

wobei

- $A_{BZ}$ eine reaktive Fläche aller Brennstoffzellen des Range-Extenders 22,
- $P_M$ einen mittleren vorgegebenen Leistungsbedarf des Kraftfahrzeugs 42;
- $J_{BZ,MEA}$ eine maximal zugelassene Stromdichte jeweiliger Membran-ElektrodenEinheiten des Range-Extenders 22 bezeichnet.

Die reaktive Fläche $A_{BZ}$ aller Brennstoffzellen des Range-Extenders 22 können also unter Berücksichtigung des mittleren Leistungsbedarfs $P_M$ sowie der vorgegebenen maximal zugelassenen Stromdichte $J_{BZ,MEA}$ der jeweiligen Membran-Elektroden-Einheiten des Range-Extenders 22 ausgelegt werden.

Der Range-Extender 22 kann zudem noch zusätzlich oder alternativ gemäß folgender Formel ausgelegt sein:

$$Z_{BZ,R} = \frac{Z_{Bat,R} * U_{Z,Bat,\,min}}{U_{Z,BZ,VL}},$$

wobei

- $Z_{BZ,R}$ die Anzahl aller in Reihe geschalteter Brennstoffzellen des Range-Extenders 22,
- $Z_{Bat,R}$ die Anzahl aller in Reihe geschalteter Batteriezellen der Hochvoltbatterie 26,

- $U_{Z,Bat,min}$ eine minimal zulässige Zellspannung der Hochvoltbatterie 26 im Betrieb,
- $U_{Z,BZ,VL}$ eine Brennstoffzellenbetriebsspannung auf Zelleebene bei Volllast bezeichnet.

Die Anzahl $Z_{BZ,R}$ aller in Reihe geschalteter Brennstoffzellen des Range-Extenders 22 wird also gemäß der Formel in Abhängigkeit von der Anzahl $Z_{Bat,R}$ aller in Reihe geschalteter Batteriezellen der Hochvoltbatterie 26, der minimal zulässigen Zellspannung $U_{Z,Bat,min}$ der Hochvoltbatterie 26 im Betrieb sowie der Brennstoffzellenbetriebsspannung $U_{Z,BZ,VL}$ auf Zelleebene festgelegt. Dadurch kann der Range-Extender 22 besonders gut an die Hochvoltbatterie 26 abgestimmt ausgelegt werden. Unter anderem kann dadurch sichergestellt werden, dass bei Zuschaltung des Range-Extenders 22 dieser auf zuverlässige Weise ein zumindest annähernd gleiches Spannungslevel wie die Hochvoltbatterie 26 bereitstellen und diese auch in ausreichendem Maße laden kann.

Durch Auslegung des Range-Extenders 22 gemäß der beiden oben genannten Formeln kann zudem sichergestellt werden, dass der Range-Exender 22 weder überdimensioniert noch unterdimensioniert wird.

In Fig. 6 ist ein Diagramm gezeigt, in dem ein Verlauf des State of Charge SoC der Hochvoltbatterie 26 über der Zeit t dargestellt ist. Im hier schematisch angedeuteten Fall kann beispielsweise davon ausgegangen werden, dass die Hochvoltbatterie 26 mehr oder weniger kontinuierlich entladen wird. Natürlich kann der State of Charge SoC während des Betriebs auch wieder ansteigen, beispielsweise wenn die Hochvoltbatterie 26 durch Rekuperation und/oder durch Zuschalten des Range-Extenders 22 geladen wird. Zudem ist schematisch ein möglicher Bereich B gekennzeichnet, welcher sich zum Zuschalten des Range-Extenders 22 eignen kann.

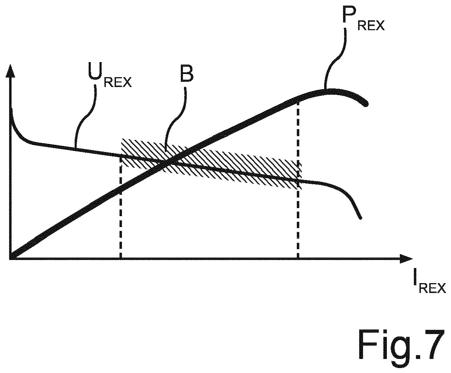

In Fig. 7 ist ein Diagramm gezeigt, in dem bei zugeschaltetem Range-Extender 22 jeweilige Verläufe einer Spannung $U_{REX}$ des Range-Extenders 22 und einer Leistungsabgabe $P_{REX}$ des Range-Extenders 22 an die Hochvoltbatterie 26 über einem vom Range-Extender 22 zur Hochvoltbatterie 26 fließenden Strom $I_{REX}$ aufgetragen sind. Dabei ist wiederum der Bereich B zum Zuschalten des Range-Extenders 22 schematisch gekennzeichnet. Aufgrund der Parallelschaltung des Range-Extenders 22 zur Hochvoltbatterie 26 ohne Gleichspannungswandler passen sich beim Zuschalten des Range-Extenders 22 im Wesentlichen automatisch die Spannung $U_{REX}$ des Range-Extenders 22 und die Spannung U der Hochvoltbatterie 26 automatisch aneinander an.

Anhand des vorliegenden Diagramms kann man erkennen, wie die Leistungsabgabe $P_{REX}$ des Range-Extenders 22 an die Hochvoltbatterie 26 variieren kann, je nachdem, wann man den Range-Extender 22 zuschaltet. Mit anderen Worten bildet das hier gezeigte Diagramm unterschiedliche mögliche Betriebspunkte des Range-Extenders 22 ab. Dieser Betriebspunkt des Range-Extenders 22 hängt wiederum - wie zuvor bereits erwähnt - maßgeblich von verschiedensten Größen der Hochvoltbatterie 26 ab. Daher ist es vor dem Zuschalten des Range-Extenders 22 wichtig, dass die Steuereinrichtung 36 in der bereits erläuterten Weise den Betriebspunkt des Range-Extenders 22 in Abhängigkeit von möglichst vielen Größen der Hochvoltbatterie 26 treffsicher ermittelt bzw. abschätzt. In Abhängigkeit des ermittelten Betriebspunkts werden die besagten Sollwerte betreffend die Zufuhr der Reaktanten zu den Brennstoffzellen-Grundmodulen 10 des Range-Extenders 22 und/oder eine Betriebstemperatur der Brennstoffzellen des Range-Extenders 22 festgelegt. Durch entsprechende Ansteuerung des Systems 40 durch die Steuereinrichtung 36 kann dafür gesorgt werden, dass zum Zeitpunkt des Zuschaltens des Range-Extenders 22 dieser auch ausreichend Reaktanten zur Verfügung gestellt bekommt und/oder die entsprechend erforderliche Betriebstemperatur aufweist, sodass der Range-Extender 22 unmittelbar im zuvor ermittelten Betriebspunkt betrieben werden kann. Denn die Schalteinrichtung 32 wird erst dann zum Zuschalten des Range-Extenders 22 mittels der Steuereinrichtung 36 entsprechend angesteuert, wenn der jeweilige Sollwert betreffend die Zufuhr der Reaktanten und/oder die Betriebstemperatur der Brennstoffzellen erreicht worden ist.

Da kein Gleichspannungswandler zwischen dem Range-Extender 22 und der Hochvoltbatterie 26 vorhanden ist, ist es zum Zeitpunkt des Zuschaltens des Range-Extenders 22 wichtig, dass dieser entsprechend genügend der Reaktanten zur Verfügung hat, um im zuvor möglichst exakt ermittelten Betriebspunkt betrieben werden zu können. So kann beispielsweise nach dem Zuschalten des Range-Extenders 22 verhindert werden, dass Hotspots innerhalb des Range-Extenders 22 entstehen und/oder der Range-Extender 22 nicht genug Leistung zum Laden der Hochvoltbatterie 26 bereitstellen kann.

Dadurch, dass die Steuereinrichtung 36 in der beschriebenen Weise den Betriebspunkt des Range-Extenders 22 noch vor dessen Zuschaltung besonders exakt abschätzt bzw. ermittelt, kann dieser besonders schonend nach dem Zuschalten betrieben werden. Ohne die erläuterte Vorgehensweise der Steuereinrichtung 36 wäre es sehr wahrscheinlich, dass der Range-Extender 22 nach nur wenigen Zuschaltvorgängen - aufgrund des nicht vorhandenen Gleichspannungswandlers und der Parallelschaltung zur Hochvoltbatterie 26 - einen Schaden nehmen würde. Dies kann durch die beschriebene Vorgehensweise verhindert werden. So ist es auch ohne Gleichspannungswandler möglich, den Range-Extender 22 zur Reichweitenverlängerung des Kraftfahrzeugs 42 zu verwenden.

BEZUGSZEICHENLISTE

10        Brennstoffzellen-Grundmodul

| 12 | Stapel aus in Reihe geschalteten Brennstoffzellen |
| 14 | erste Endplatte |
| 16 | zweite Endplatte |
| 18 | Luftverdichter |
| 19 | in Reihe geschaltete Gruppen von Brennstoffzellen-Grundmodulen |
| 20 | modulares Range-Extender-System |
| 22 | Variante eines Range-Extenders |
| 24 | Schaltungsanordnung |
| 26 | Hochvoltbatterie |
| 28 | elektrische Antriebsmaschine |
| 30 | Frequenzumrichter |
| 32 | Schalteinrichtung |
| 34 | Freilaufdiode |
| 36 | Steuereinrichtung |
| 38 | Sensoreinrichtung |
| 40 | System zum Bereitstellen von Reaktanten und zum Temperieren der Brennstoffzellen |
| 42 | Kraftfahrzeug |
| $A_{BZ}$ | reaktive Fläche aller Brennstoffzellen des Range-Extenders |
| B | Bereich zum Zuschalten des Range-Extenders |
| $I_{REX}$ | vom Range-Extender zur Hochvoltbatterie fließender Strom |
| $J_{BZ,MEA}$ | maximal zugelassene Stromdichte jeweiliger Membran-Elektroden-Einheiten des Range-Extenders |
| P | momentaner Leistungsbedarf des Kraftfahrzeugs |
| $P_M$ | mittlerer vorgegebener Leistungsbedarf des Kraftfahrzeugs |
| $P_{REX}$ | Leistungsabgabe des Range-Extenders an die Hochvoltbatterie |
| SoC | State of Charge der Hochvoltbatterie |
| t | Zeit |
| U | Spannung der Hochvoltbatterie |
| UREX | Spannung des Range-Extenders |
| $U_{Z,Bat,min}$ | minimal zulässige Zellspannung der Hochvoltbatterie im Betrieb |
| $U_{Z,BZ,VL}$ | Brennstoffzellenbetriebsspannung auf Zelleebene bei Volllast |
| $Z_{Bat,R}$ | Anzahl aller in Reihe geschalteter Batteriezellen der Hochvoltbatterie |
| $Z_{BZ,R}$ | Anzahl aller in Reihe geschalteter Brennstoffzellen des Range-Extenders |

**Patentansprüche**

1. Schaltungsanordnung (24) für ein Bordnetz eines elektrisch angetriebenen Kraftfahrzeugs (42), umfassend

- eine Hochvoltbatterie (26) zur Energieversorgung einer elektrischen Antriebsmaschine (28) des Kraftfahrzeugs (42);

- einen zum Aufladen der Hochvoltbatterie (26) ausgelegten Range-Extender (22), aufweisend mehrere gleiche Brennstoffzellen-Grundmodule (10) mit jeweils mehreren in Reihe geschalteten Brennstoffzellen und Schnittstellen zum Zuführen von Reaktanten in Form von Wasserstoff und Luft;
- eine Schalteinrichtung (32) zum Zuschalten des Range-Extenders (22), welche dazu ausgelegt ist, die Hochvoltbatterie (26) und den Range-Extender (22) ohne einen Gleichspannungswandler in Form einer Parallelschaltung elektrisch leitend miteinander zu verbinden;
- eine Steuereinrichtung (36), welche dazu eingerichtet ist, folgende Schritte durchzuführen, nachdem diese ein Aktivierungssignal betreffend den Range-Extender (22) erhalten hat:

  ▪ Ermitteln eines Betriebspunkts des Range-Extenders (22) in Abhängigkeit von wenigstens einer Größe der Hochvoltbatterie (26);
  ▪ Festlegen eines Sollwerts betreffend eine Zufuhr der Reaktanten zu den Brennstoffzellen-Grundmodulen (10) und/oder eine Betriebstemperatur der Brennstoffzellen basierend auf dem ermittelten Betriebspunkt;
  ▪ Ansteuern eines zum Bereitstellen der Reaktanten ausgelegten Systems (40) entsprechend des festgelegten Sollwerts, falls der Sollwert die Zufuhr der Reaktanten betrifft, und Ansteuern eines zum Temperieren der Brennstoffzellen ausgelegten Systems (40) entsprechend des festgelegten Sollwerts, falls der Sollwert die Betriebstemperatur betrifft;
  ▪ Ansteuern der Schalteinrichtung (32) zum Zuschalten des Range-Extenders (22), erst nachdem der Sollwert betreffend die Zufuhr der Reaktanten erreicht worden ist, falls der Sollwert nur die Zufuhr der Reaktanten betrifft;
  ▪ Ansteuern der Schalteinrichtung (32) zum Zuschalten des Range-Extenders (22), erst nachdem der Sollwert betreffend die Betriebstemperatur erreicht worden ist, falls der Sollwert nur die Betriebstemperatur betrifft;
  ▪ Ansteuern der Schalteinrichtung (32) zum Zuschalten des Range-Extenders (22), erst nachdem der Sollwert betreffend die Zufuhr der Reaktanten und/oder die Betriebstemperatur erreicht worden ist, falls der Sollwert die Zufuhr der Reaktanten und die Betriebstemperatur betrifft.

2. Schaltungsanordnung (24) nach Anspruch 1,

**dadurch gekennzeichnet, dass**

die Steuereinrichtung (36) dazu eingerichtet ist, jeweilige Volumenströme des Wasserstoffs und der Luft zu den Brennstoffzellen-Grundmodulen (10) zu überwachen und erst dann die Schalteinrichtung (32) zum Zuschalten des Range-Extenders (22) anzusteuern, wenn die Volumenströme den vorgegebenen Sollwerten entsprechen.

3. Schaltungsanordnung (24) nach Anspruch 1 oder 2,
**dadurch gekennzeichnet, dass**
die Steuereinrichtung (36) dazu eingerichtet ist, eine jeweilige Differenz zwischen einer Ist-Temperatur der Brennstoffzellen und dem festgelegten Sollwert betreffend die Betriebstemperatur der Brennstoffzellen zu ermitteln sowie in Abhängigkeit von der ermittelten Differenz eine Temperatur und/oder einen Volumenstrom eines Fluids einer Temperiereinrichtung des Range-Extenders (22) einzustellen.

4. Schaltungsanordnung (24) nach einem der vorhergehenden Ansprüche,
**dadurch gekennzeichnet, dass**
die Steuereinrichtung (36) dazu eingerichtet ist, in Abhängigkeit von einer Spannung der Hochvoltbatterie (26) den Betriebspunkt des Range-Extenders (22) zu ermitteln.

5. Schaltungsanordnung (24) nach einem der vorhergehenden Ansprüche,
**dadurch gekennzeichnet, dass**
die Steuereinrichtung (36) dazu eingerichtet ist, in Abhängigkeit von einem Ladezustand der Hochvoltbatterie (26) den Betriebspunkt des Range-Extenders (22) zu ermitteln.

6. Schaltungsanordnung (24) nach einem der vorhergehenden Ansprüche,
**dadurch gekennzeichnet, dass**
die Steuereinrichtung (36) dazu eingerichtet ist, in Abhängigkeit von einem Betriebszustand der Hochvoltbatterie (26) den Betriebspunkt des Range-Extenders (22) zu ermitteln und/oder die Sollwerte festzulegen.

7. Schaltungsanordnung (24) nach Anspruch 6,
**dadurch gekennzeichnet, dass**
die Steuereinrichtung (36) dazu eingerichtet ist, hinsichtlich des Betriebszustands der Hochvoltbatterie (26) zu ermitteln, ob und wie stark die Hochvoltbatterie (26) entladen oder geladen wird.

8. Schaltungsanordnung (24) nach einem der vorhergehenden Ansprüche,
**dadurch gekennzeichnet, dass**
die Steuereinrichtung (36) dazu eingerichtet ist, in Abhängigkeit von Daten, welche ein Routenprofil des Kraftfahrzeugs (42) und/oder ein Flottenprofil von mehreren Kraftfahrzeugen (42) charakterisieren, den Betriebspunkt des Range-Extenders (22) zu ermitteln und/oder die Sollwerte festzulegen.

9. Schaltungsanordnung (24) nach einem der vorhergehenden Ansprüche,
**dadurch gekennzeichnet, dass**
die Steuereinrichtung (36) dazu eingerichtet ist, in Abhängigkeit von Daten, welche ein Fahrverhalten eines Fahrers des Kraftfahrzeugs (42) charakterisieren, den Betriebspunkt des Range-Extenders (22) zu ermitteln und/oder die Sollwerte festzulegen.

10. Schaltungsanordnung (24) nach einem der vorhergehenden Ansprüche,
**dadurch gekennzeichnet, dass**
die Steuereinrichtung (36) dazu eingerichtet ist, die Sollwerte betreffend die Reaktanten, um ein vorgegebenes Maß höher einzustellen als es für den ermittelten Betriebspunkt des Range-Extenders (22) erforderlich ist.

11. Schaltungsanordnung (24) nach einem der vorhergehenden Ansprüche,
**dadurch gekennzeichnet, dass**
die Steuereinrichtung (36) dazu eingerichtet ist, nach dem Zuschalten des Range-Extenders (22) den zuvor ermittelten Betriebspunkt mit einem sich tatsächlich einstellenden Betriebspunkt des Range-Extenders (22) zu vergleichen und in Abhängigkeit davon die Zufuhr von Wasserstoff und Luft abgestimmt auf den tatsächlichen Betriebspunkt zu justieren.

12. Schaltungsanordnung (24) nach Anspruch 11,
**dadurch gekennzeichnet, dass**
die Steuereinrichtung (36) dazu eingerichtet ist, anhand einer Stromstärke, welche einen vom Range-Extender (22) zur Hochvoltbatterie (26) fließenden Strom charakterisiert, den sich tatsächlich einstellenden Betriebspunkt des Range-Extenders (22) zu ermitteln.

13. Schaltungsanordnung (24) nach einem der vorhergehenden Ansprüche,
**dadurch gekennzeichnet, dass**
die Steuereinrichtung (36) dazu eingerichtet ist, einen Zustand der Brennstoffzellen-Grundmodule (10) zu ermitteln und für jeweilige Gruppen von parallel geschalteten Brennstoffzellen-Grundmodulen (10) unterschiedliche Sollwerte je nach Zustand ihrer Brennstoffzellen-Grundmodule (10) vorzugeben.

14. Schaltungsanordnung (24) nach Anspruch 13,
**dadurch gekennzeichnet, dass**
der Zustand eine jeweilige Temperatur und/oder einen jeweiligen Alterungszustand der Brennstoffzellen-Grundmodule (10) umfasst.

**15.** Schaltungsanordnung (24) nach einem der vorhergehenden Ansprüche,
**dadurch gekennzeichnet, dass**
der Range-Extender (22) gemäß folgender Formel ausgelegt ist:

$$Z_{BZ,R} = \frac{Z_{Bat,R} * U_{Z,Bat,min}}{U_{Z,BZ,VL}},$$

wobei

- $Z_{BZ,R}$ die Anzahl aller in Reihe geschalteter Brennstoffzellen des Range-Extenders (22) bezeichnet,
- $Z_{Bat,R}$ die Anzahl aller in Reihe geschalteter Batteriezellen der Hochvoltbatterie (26) bezeichnet,
- $U_{Z,Bat,min}$ eine minimal zulässige Zellspannung der Hochvoltbatterie (26) im Betrieb bezeichnet,
- $U_{Z,BZ,VL}$ eine Brennstoffzellenbetriebsspannung auf Zelleebene bei Volllast bezeichnet.

**16.** Schaltungsanordnung (24) nach einem der vorhergehenden Ansprüche, **dadurch gekennzeichnet, dass**
der Range-Extender (22) gemäß folgender Formel ausgelegt ist:

$$A_{BZ} = \frac{P_M}{Z_{BZ,R}} * J_{BZ,MEA},$$

wobei

- $A_{BZ}$ eine reaktive Fläche aller Brennstoffzellen des Range-Extenders (22) bezeichnet,
- $P_M$ einen mittleren vorgegebenen Leistungsbedarf des Kraftfahrzeugs (42) bezeichnet,
- $J_{BZ,MEA}$ eine maximal zugelassene Stromdichte jeweiliger Membran-Elektroden-Einheiten des Range-Extenders (22) bezeichnet.

**17.** Schaltungsanordnung (24) nach Anspruch 16,
**dadurch gekennzeichnet, dass**
der mittlere vorgegebene Leistungsbedarf (PM) des Kraftfahrzeugs (42) einen mittleren Leistungsbedarf der Antriebsmaschine (28) des Kraftfahrzeugs (42) für ein vorgegebenes Fahrprofil des Kraftfahrzeugs (42) und zumindest eines Nebenverbrauchers des Kraftfahrzeugs (42), insbesondere einer Klimatisierungseinrichtung des Kraftfahrzeugs (42), umfasst.

**18.** Elektrisch angetriebenes Kraftfahrzeug (42) mit einer Schaltungsanordnung (24) nach einem der vorhergehenden Ansprüche.

**19.** Verfahren zum Betreiben einer Schaltungsanordnung (24) nach einem der Ansprüche 1 bis 17, bei welchem die Steuereinrichtung (36) der Schaltungsanordnung (24) folgende Schritte durchführt, nachdem diese ein Aktivierungssignal betreffend den Range-Extender (22) erhalten hat:

- Ermitteln eines Betriebspunkts des Range-Extenders (22) in Abhängigkeit von wenigstens einer Größe der Hochvoltbatterie (26);
- Festlegen eines Sollwerts betreffend eine Zufuhr der Reaktanten zu den Brennstoffzellen-Grundmodulen (10) und/oder eine Betriebstemperatur der Brennstoffzellen basierend auf dem ermittelten Betriebspunkt;
- Ansteuern eines zum Bereitstellen der Reaktanten ausgelegten Systems (40) entsprechend des festgelegten Sollwerts, falls der Sollwert die Zufuhr der Reaktanten betrifft, und Ansteuern eines zum Temperieren der Brennstoffzellen ausgelegten Systems (40) entsprechend des festgelegten Sollwerts, falls der Sollwert die Betriebstemperatur betrifft;
- Ansteuern der Schalteinrichtung (32) zum Zuschalten des Range-Extenders, (22) erst nachdem der Sollwert betreffend die Zufuhr der Reaktanten erreicht worden ist, falls der Sollwert nur die Zufuhr der Reaktanten betrifft;
- Ansteuern der Schalteinrichtung (32) zum Zuschalten des Range-Extenders (22), erst nachdem der Sollwert betreffend die Betriebstemperatur erreicht worden ist, falls der Sollwert nur die Betriebstemperatur betrifft;
- Ansteuern der Schalteinrichtung (32) zum Zuschalten des Range-Extenders (22), erst nachdem der Sollwert betreffend die Zufuhr der Reaktanten und/oder die Betriebstemperatur erreicht worden ist, falls der Sollwert die Zufuhr der Reaktanten und die Betriebstemperatur betrifft.

**Claims**

**1.** Circuit arrangement (24) for a vehicle electrical system of an electrically driven motor vehicle (42), comprising

- a high-voltage battery (26) for supplying power to an electrical prime mover (28) of the motor vehicle (42);
- a range extender (22) which is designed to charge the high-voltage battery (26) and which has a plurality of identical fuel-cell base modules (10) each having a plurality of fuel cells connected in series and interfaces for supplying reactants in the form of hydrogen and air;
- a switching apparatus (32) for connecting the range extender (22), which apparatus is designed to connect the high-voltage battery (26) and the range extender (22) in an electrically conductive manner to one another without a DC-to-DC converter in the form of a parallel circuit;
- a control apparatus (36) configured to carry out the following steps after said control apparatus has received an activation signal regarding the range extender (22):
- determining an operating point of the range extender (22) depending on at least one variable of the high-voltage battery (26);
- defining a setpoint value regarding the supply of the reactants to the fuel-cell base modules (10) and/or an operating temperature of the fuel cells on the basis of the determined operating point;
- controlling a system (40) designed to provide the reactants in accordance with the defined setpoint value if the setpoint value concerns the supply of the reactants, and controlling a system (40) designed to control the temperature of the fuel cells in accordance with the defined setpoint value if the setpoint value concerns the operating temperature;
- controlling the switching apparatus (32) so as to connect the range extender (22), only after the setpoint value regarding the supply of the reactants has been reached, if the setpoint value only concerns the supply of the reactants;
- controlling the switching apparatus (32) so as to connect the range extender (22), only after the setpoint value regarding the operating temperature has been reached, if the setpoint value only concerns the operating temperature;
- controlling the switching apparatus (32) so as to connect the range extender (22), only after the setpoint value regarding the supply of the reactants and/or the operating temperature has been reached, if the setpoint value concerns the supply of the reactants and the operating temperature.

2. Circuit arrangement (24) according to claim 1, **characterised in that**
the control apparatus (36) is configured to monitor respective volumetric flows of the hydrogen and of the air to the fuel-cell base modules (10) and to control the switching apparatus (32) so as to connect the range extender (22) only when the volumetric flows correspond to the preset setpoint values.

3. Circuit arrangement (24) according to claim 1 or 2, **characterised in that**
the control apparatus (36) is configured to determine a respective difference between an actual temperature of the fuel cells and the defined setpoint value regarding the operating temperature of the fuel cells and to set a temperature and/or a volumetric flow of a fluid of a temperature control apparatus of the range extender (22) depending on the determined difference.

4. Circuit arrangement (24) according to any of the preceding claims, **characterised in that**
the control apparatus (36) is configured to determine the operating point of the range extender (22) depending on a voltage of the high-voltage battery (26).

5. Circuit arrangement (24) according to any of the preceding claims, **characterised in that**
the control apparatus (36) is configured to determine the operating point of the range extender (22) depending on a state of charge of the high-voltage battery (26).

6. Circuit arrangement (24) according to any of the preceding claims, **characterised in that**
the control apparatus (36) is configured to determine the operating point of the range extender (22) and/or to define the setpoint values depending on an operating state of the high-voltage battery (26).

7. Circuit arrangement (24) according to claim 6, **characterised in that**
the control apparatus (36) is configured to determine, with regard to the operating state of the high-voltage battery (26), whether and to what extent the high-voltage battery (26) is being discharged or charged.

8. Circuit arrangement (24) according to any of the preceding claims, **characterised in that**
the control apparatus (36) is configured to determine the operating point of the range extender (22) and/or to define the setpoint values depending on data characterising a route profile of the motor vehicle (42) and/or a fleet profile of a plurality of motor vehicles (42).

9. Circuit arrangement (24) according to any of the preceding claims, **characterised in that**
the control apparatus (36) is configured to determine the operating point of the range extender (22) and/or to define the setpoint values depending on data characterising a driving behaviour of a driver of the motor vehicle (42).

10. Circuit arrangement (24) according to any of the preceding claims, **characterised in that**
the control apparatus (36) is configured to set the setpoint values regarding the reactants a preset amount higher than is required for the determined operating point of the range extender (22).

11. Circuit arrangement (24) according to any of the preceding claims,
**characterised in that**
the control apparatus (36) is configured to compare the previously determined operating point with an actually occurring operating point of the range extender (22) after the range extender (22) is connected and, depending thereon, to adjust the supply of hydrogen and air to match the actual operating point.

12. Circuit arrangement (24) according to claim 11,
**characterised in that**
the control apparatus (36) is configured to determine the actually occurring operating point of the range extender (22) on the basis of a current intensity which characterises a current flowing from the range extender (22) to the high-voltage battery (26).

13. Circuit arrangement (24) according to any of the preceding claims,
**characterised in that**
the control apparatus (36) is configured to determine a state of the fuel-cell base modules (10) and to specify, for respective groups of fuel-cell base modules (10) connected in parallel, different setpoint values depending on the state of its fuel-cell base modules (10).

14. Circuit arrangement (24) according to claim 13,
**characterised in that**
the state comprises a respective temperature and/or a respective ageing state of the fuel-cell base modules (10).

15. Circuit arrangement (24) according to any of the preceding claims,
**characterised in that**
the range extender (22) is designed according to the following formula:

$$Z_{BZ,R} = \frac{Z_{Bat,R} * U_{Z,Bat,min}}{U_{Z,BZ,VL}},$$

wherein

- $Z_{BZ,R}$ denotes the number of all the fuel cells of the range extender (22) which are connected in series,
- $Z_{Bat,R}$ denotes the number of all the battery cells of the high-voltage battery (26) which are connected in series,
- denotes a minimum permissible cell voltage of the high-voltage battery (26) when in operation,
- $U_{Z,BZ,VL}$ denotes a fuel-cell operating voltage at cell level at full load.

16. Circuit arrangement (24) according to any of the preceding claims, **characterised in that**
the range extender (22) is designed according to the following formula:

$$A_{BZ} = \frac{P_M}{Z_{BZ,R}} * J_{BZ,MEA},$$

wherein

- $A_{BZ}$ denotes a reactive surface of all fuel cells of the range extender (22),
- $P_M$ denotes a mean preset power requirement of the motor vehicle (42),
- $J_{BZ,MEA}$ denotes a maximum permissible current density of respective membrane electrode units of the range extender (22).

17. Circuit arrangement (24) according to claim 16,
**characterised in that**
the mean preset power requirement (PM) of the motor vehicle (42) comprises a mean power requirement of the prime mover (28) of the motor vehicle (42) for a preset driving profile of the motor vehicle (42) and of at least one auxiliary consumer of the motor vehicle (42), in particular an air-conditioning apparatus of the motor vehicle (42).

18. Electrically driven motor vehicle (42) having a circuit arrangement (24) according to any of the preceding claims.

19. Method for operating a circuit arrangement (24) according to any of claims 1 to 17, in which the control apparatus (36) of the circuit arrangement (24) performs the following steps after receiving an activation signal regarding the range extender (22):

- determining an operating point of the range extender (22) depending on at least one variable of the high-voltage battery (26);
- defining a setpoint value regarding the supply of the reactants to the fuel-cell base modules (10) and/or an operating temperature of the fuel cells on the basis of the determined operating point;
- controlling a system (40) designed to provide the reactants in accordance with the defined setpoint value if the setpoint value concerns the supply of the reactants, and controlling a system (40) designed to control the temperature of the fuel cells in accordance with the defined setpoint value if the setpoint value concerns the operating temperature;
- controlling the switching apparatus (32) so as to connect the range extender (22), only after the setpoint value regarding the supply of the reactants has been reached, if the setpoint value only concerns the supply of the reactants;

- controlling the switching apparatus (32) so as to connect the range extender (22), only after the setpoint value regarding the operating temperature has been reached, if the setpoint value only concerns the operating temperature;

- controlling the switching apparatus (32) so as to connect the range extender (22), only after the setpoint value regarding the supply of the reactants and/or the operating temperature has been reached, if the setpoint value concerns the supply of the reactants and the operating temperature.

**Revendications**

1. Circuit (24) pour un réseau de bord d'un véhicule automobile (42) à propulsion électrique, comprenant

- une batterie haute tension (26) pour l'alimentation en énergie d'un moteur d'entraînement électrique (28) du véhicule automobile (42) ;

- un prolongateur d'autonomie (22) conçu pour charger la batterie haute tension (26), présentant plusieurs modules de base de cellules à combustible (10) identiques avec respectivement plusieurs cellules à combustible montées en série et des interfaces pour l'alimentation des réactifs sous forme d'hydrogène et d'air ;

- un appareil de commutation (32) pour connecter le prolongateur d'autonomie (22), qui est conçu pour relier électriquement la batterie haute tension (26) et le prolongateur d'autonomie (22) sans un convertisseur de tension continue sous la forme d'un circuit parallèle ;

- un appareil de commande (36) qui est conçu pour exécuter les étapes suivantes après avoir reçu un signal d'activation concernant le prolongateur d'autonomie (22) :

- déterminer un point de fonctionnement du prolongateur d'autonomie (22) en fonction d'au moins une taille de la batterie haute tension (26) ;

- déterminer une valeur de consigne concernant une alimentation des réactifs vers les modules de base de cellules à combustible (10) et/ou une température de fonctionnement des cellules à combustible sur la base du point de fonctionnement déterminé ;

- commander un système (40) conçu pour fournir les réactifs en fonction de la valeur de consigne fixée, dans le cas où la valeur de consigne concerne l'alimentation des réactifs, et commander un système (40) conçu pour tempérer les cellules à combustible en fonction de la valeur de consigne fixée, dans le cas où la valeur de consigne concerne la température de fonctionnement ;

- commander l'appareil de commutation (32) pour mettre en circuit le prolongateur d'autonomie (22) seulement après que la valeur de consigne concernant l'alimentation des réactifs a été atteinte, dans le cas où la valeur de consigne ne concerne que l'alimentation des réactifs ;

- commander l'appareil de commutation (32) pour mettre en circuit le prolongateur d'autonomie (22) seulement après que la valeur de consigne concernant la température de fonctionnement a été atteinte, dans le cas où la valeur de consigne ne concerne que la température de fonctionnement ;

- commander l'appareil de commutation (32) pour mettre en circuit le prolongateur d'autonomie (22) seulement après que la valeur de consigne concernant l'alimentation des réactifs et/ou la température de fonctionnement a été atteinte, dans le cas où la valeur de consigne concerne l'alimentation des réactifs et la température de fonctionnement.

2. Circuit (24) selon la revendication 1, **caractérisé en ce que** l'appareil de commande (36) est conçu pour surveiller les débits volumétriques respectifs de l'hydrogène et de l'air vers les modules de base de cellules à combustible (10) et pour ne commander l'appareil de commutation (32) pour la mise en circuit du prolongateur d'autonomie (22) que lorsque les débits volumétriques correspondent aux valeurs de consigne prédéfinies.

3. Circuit (24) selon la revendication 1 ou 2, **caractérisé en ce que** l'appareil de commande (36) est conçu pour déterminer une différence respective entre une température réelle des cellules à combustible et la valeur de consigne fixée concernant la température de fonctionnement des cellules à combustible ainsi que pour régler, en fonction de la différence déterminée, une température et/ou un débit volumique d'un fluide d'un appareil de régulation de température du prolongateur d'autonomie (22).

4. Circuit (24) selon l'une quelconque des revendications précédentes, **caractérisé en ce que** l'appareil de commande (36) est conçu pour déterminer le point de fonctionnement du prolongateur d'autonomie (22) en fonction d'une tension de la batterie haute tension (26).

5. Circuit (24) selon l'une quelconque des revendications précédentes,
**caractérisé en ce que**
l'appareil de commande (36) est conçu pour déterminer le point de fonctionnement du prolongateur d'autonomie (22) en fonction d'un état de charge de la batterie haute tension (26).

6. Circuit (24) selon l'une quelconque des revendications précédentes,
**caractérisé en ce que**
l'appareil de commande (36) est conçu pour déterminer le point de fonctionnement du prolongateur d'autonomie (22) et/ou pour fixer les valeurs de consigne en fonction d'un état de fonctionnement de la batterie haute tension (26).

7. Circuit (24) selon la revendication 6,
**caractérisé en ce que**
l'appareil de commande (36) est conçu pour déterminer, en ce qui concerne l'état de fonctionnement de la batterie haute tension (26), si et dans quelle mesure la batterie haute tension (26) est déchargée ou chargée.

8. Circuit (24) selon l'une quelconque des revendications précédentes,
**caractérisé en ce que**
l'appareil de commande (36) est conçu pour déterminer le point de fonctionnement du prolongateur d'autonomie (22) et/ou pour fixer les valeurs de consigne en fonction de données qui caractérisent un profil d'itinéraire du véhicule automobile (42) et/ou un profil de flotte de plusieurs véhicules automobiles (42).

9. Circuit (24) selon l'une quelconque des revendications précédentes,
**caractérisé en ce que**
l'appareil de commande (36) est conçu pour déterminer le point de fonctionnement du prolongateur d'autonomie (22) et/ou pour fixer les valeurs de consigne en fonction de données qui caractérisent un comportement de conduite d'un conducteur du véhicule automobile (42).

10. Circuit (24) selon l'une quelconque des revendications précédentes,
**caractérisé en ce que**
l'appareil de commande (36) est conçu pour régler les valeurs de consigne concernant les réactifs à un niveau prédéterminé plus élevé que celui nécessaire pour le point de fonctionnement déterminé du prolongateur d'autonomie (22).

11. Circuit (24) selon l'une quelconque des revendications précédentes,
**caractérisé en ce que**
l'appareil de commande (36) est conçu pour comparer, après la mise en circuit du prolongateur d'autonomie (22), le point de fonctionnement déterminé auparavant avec un point de fonctionnement du prolongateur d'autonomie (22) qui s'établit effectivement et, en fonction de cela, pour ajuster l'apport d'hydrogène et d'air en accord avec le point de fonctionnement effectif.

12. Circuit (24) selon la revendication 11,
**caractérisé en ce que**
l'appareil de commande (36) est conçu pour déterminer, à l'aide d'une intensité de courant qui caractérise un courant circulant du prolongateur d'autonomie (22) vers la batterie haute tension (26), le point de fonctionnement du prolongateur d'autonomie (22) qui s'établit effectivement.

13. Circuit (24) selon l'une quelconque des revendications précédentes,
**caractérisé en ce que**
l'appareil de commande (36) est conçu pour déterminer un état des modules de base de cellules à combustible (10) et pour prescrire des valeurs de consigne différentes pour des groupes respectifs de modules de base de cellules à combustible (10) montés en parallèle, selon l'état de leurs modules de base de cellules à combustible (10).

14. Circuit (24) selon la revendication 13,
**caractérisé en ce que**
l'état comprend une température respective et/ou un état de vieillissement respectif des modules de base de cellules à combustible (10).

15. Circuit (24) selon l'une quelconque des revendications précédentes,
**caractérisé en ce que**
le prolongateur d'autonomie (22) est conçu selon la formule suivante :

$$Z_{BZ,R} = \frac{Z_{Bat,R} * U_{Z,Bat,\,min}}{U_{Z,BZ,VL}},$$

dans lequel

- $Z_{BZ,R}$ désigne le nombre de toutes les cellules à combustible connectées en série du prolongateur d'autonomie (22),
- $Z_{Bat,R}$ désigne le nombre de tous les éléments de batterie connectés en série de la batterie haute tension (26),
- $U_{Z,Bat,min}$ désigne une tension de cellule minimale admissible de la batterie haute tension (26) en fonctionnement,
- $U_{Z,BZ,VL}$ désigne une tension de fonctionnement de cellule au niveau de la cellule à pleine charge.

**16.** Circuit (24) selon l'une quelconque des revendications précédentes,
**caractérisé en ce que**
le prolongateur d'autonomie (22) est conçu selon la formule suivante :

$$A_{BZ} = \frac{P_M}{Z_{BZ,R}} * J_{BZ,MEA},$$

dans lequel

- $A_{BZ}$ désigne une surface réactive de toutes les cellules à combustible du prolongateur d'autonomie (22),
- $P_M$ désigne une demande de puissance moyenne prédéterminée du véhicule automobile (42),
- $J_{BZ \cdot MEA}$ désigne une densité de courant maximale autorisée des unités d'électrodes à membrane respectives du prolongateur d'autonomie (22).

**17.** Circuit (24) selon la revendication 16,
**caractérisé en ce que**
la demande de puissance moyenne prédéterminée (PM) du véhicule automobile (42) comprend une demande de puissance moyenne du moteur d'entraînement (28) du véhicule automobile (42) pour un profil de conduite prédéterminé du véhicule automobile (42) et d'au moins un utilisateur secondaire du véhicule automobile (42), notamment d'un appareil de climatisation du véhicule automobile (42).

**18.** Véhicule automobile à entraînement électrique (42) comportant un circuit (24) selon l'une quelconque des revendications précédentes.

**19.** Procédé d'exploitation d'un circuit (24) selon l'une quelconque des revendications 1 à 17, dans lequel l'appareil de commande (36) du circuit (24) exécute les étapes suivantes après avoir reçu un signal d'activation concernant le prolongateur d'autonomie (22) :

- déterminer un point de fonctionnement du prolongateur d'autonomie (22) en fonction d'au moins une taille de la batterie haute tension (26) ;
- déterminer une valeur de consigne concernant une alimentation des réactifs vers les modules de base de cellules à combustible (10) et/ou une température de fonctionnement des cellules à combustible sur la base du point de fonctionnement déterminé ;
- commander un système (40) conçu pour fournir les réactifs en fonction de la valeur de consigne fixée, dans le cas où la valeur de consigne concerne l'alimentation des réactifs, et commander un système (40) conçu pour tempérer les cellules à combustible en fonction de la valeur de consigne fixée, dans le cas où la valeur de consigne concerne la température de fonctionnement ;
- commander l'appareil de commutation (32) pour mettre en circuit le prolongateur d'autonomie (22) seulement après que la valeur de consigne concernant l'alimentation des réactifs a été atteinte, dans le cas où la valeur de consigne ne concerne que l'alimentation des réactifs ;
- commander l'appareil de commutation (32) pour mettre en circuit le prolongateur d'autonomie (22) seulement après que la valeur de consigne concernant la température de fonctionnement a été atteinte, dans le cas où la valeur de consigne ne concerne que la température de fonctionnement ;
- commander l'appareil de commutation (32) pour mettre en circuit le prolongateur d'autonomie (22) seulement après que la valeur de consigne concernant l'alimentation des réactifs et/ou la température de fonctionnement a été atteinte, dans le cas où la valeur de consigne concerne l'alimentation des réactifs et la température de fonctionnement.

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003207156 A1
- WO 2019041383 A1